# EUROPÄISCHE PATENTSCHRIFT

(11) **EP 2 913 677 B1**
(45) Veröffentlichungstag und Bekanntmachung des Hinweises auf die Patenterteilung: **16.05.2018**
(21) Anmeldenummer: 15154337.8
(22) Anmeldetag: 09.02.2015
(51) Int. Cl.: G01N 35/00, G01N 35/10

(54) **Transportwerkzeug zum Transportieren eines Laborartikels**
Transport tool for transporting a laboratory item
Outil de transport destiné au transport d'un article de laboratoire

(30) Priorität: 26.02.2014 CH 2742014
(43) Veröffentlichungstag der Anmeldung: 02.09.2015
(73) Patentinhaber: Tecan Trading AG, 8708 Männedorf (CH)
(72) Erfinder: Buchloh, Stefan, 4500 Solothurn (CH); Iten, Thomas, 8046 Zürich (CH); Birkner, Nico, 75180 Pforzheim (DE)
(74) Vertreter: OK pat AG

(56) Entgegenhaltungen:
- EP-A1- 1 361 440
- EP-A2- 1 452 869
- US-A1- 2012 291 872
- US-A1- 2013 259 635

## Beschreibung

Die Erfindung betrifft ein Transportwerkzeug zum Transportieren eines Laborartikels mit einem Pipettiersystem zum Aspirieren und Dispensieren von Flüssigkeiten.

Pipettiersysteme zum automatisierten Verarbeiten von Flüssigkeiten sind aus dem Stand der Technik gut bekannt. So wird beispielsweise ein solches Pipettiersystem vom aktuellen Anmelder unter dem Handelsnamen FREEDOM EVO® gebaut und vertrieben. Solche automatisierten Pipettiersysteme umfassen in der Regel eine oder mehr Pipetten zum Aspirieren und Dispensieren von Flüssigkeiten in und aus verschiedenen Probenbehältern.

Bekannt für den Betrieb von solchen Pipettiersystemen ist der Einsatz z.B. von Pipettenspitzen aus Metall, die eine feste Einheit mit der jeweiligen Pipette bilden. Insbesondere aber wenn mit Flüssigkeiten, welche biologische Materialien enthalten, gearbeitet wird, wird bevorzugt auf Einwegpipettenspitzen zurückgegriffen, welche automatisiert auf die Pipetten aufgesteckt, unmittelbar nach dem Einsatz mit einem Abwurfmechanismus abgeworfen und vorschriftsmässig entsorgt werden. Auf diese Weise kann das Risiko z.B. von Kreuzkontaminationen nach mehreren Pipettierdurchgängen deutlich verringert werden. Solche Einwegpipettenspitzen sind dabei in der Regel aus einem kostengünstigen und chemisch inerten Kunststoff hergestellt, um den erhöhten Verbrauch im Vergleich zu den festen Pipettenspitzen zu kompensieren. Standardmässig werden Einwegpipettenspitzen in speziellen Trägern bereitgestellt. Diese Träger bestehen typischerweise aus einer durchgehenden Bodenplatte, die von einer Mehrzahl von Lageröffnungen durchdrungen ist. In jeder Lageröffnung kann von oben eine Einwegpipettenspitze eingesetzt und dort gelagert werden. Mittels Verstärkungsstreben, welche am oberen Ende der Pipettenspitzen angeordnet sind (oder einer anderweitigen Verbreiterung) wird jede Pipettenspitze in der Lageröffnung gehalten, da sie mit der Unterseite jeder Strebe die Oberseite des Trägerbodens beaufschlägt. Dabei sind die Lageröffnungen bevorzugt in einem bestimmten Raster (Array) angeordnet. Bekannt ist das Anordnen von Pipettenspitzen in dem Träger in einem 12x8 Array, analog zu der Anzahl und Anordnung einer 96er Standard-Mikroplatte (SBS-Standard "Society for Biomolecular Screening", veröffentlicht vom American National Standard Institute (ANSI/SBS 1-2-3-4-2004)).

Jeweils eine Einwegpipettenspitze wird von einer Pipette aufgenommen, indem mit einer definierten Kraft das Aufnahmeende einer Pipette in den Innenraum der Einwegpipettenspitze gedrückt wird. Typischerweise sind die Öffnung der Einwegpipettenspitzen und ihr Innenraum so dimensioniert, dass die Pipettenspitze reibschlüssig und dichtend an dem Endbereich oder "Konus" der Pipette gehalten wird. Alternativ kann auch ein dichtender Formschluss oder ein Konus mit deformierbarem O-Ring zum Halten der Pipettenspitze vorgesehen sein. Zum Lösen der Einwegpipettenspitze von der Pipette des Pipettiersystems wird dann mittels eines Abwurfmechanismus eine entsprechende Gegenkraft auf den oberen Kragenbereich der Einwegpipettenspitze ausgeübt, so dass diese vom Endbereich der Pipette geschoben und abgeworfen werden kann.

Sind sämtliche Einwegpipettenspitzen eines Pipettenspitzenträgers während des Betriebs aufgebraucht, muss der leere Pipettenspitzenträger durch den Benutzer von Hand entfernt und durch einen vollen Träger ersetzt werden. Alternativ kann ein solcher leerer Träger durch einen separaten Roboter-Greifer des Pipettiersystems gegriffen und an geeigneter Stelle zur Entsorgung deponiert werden.

Dabei wird bei automatisierten Laborgeräten wie bei den hier behandelten Pipettiersystemen bevorzugt, dass möglichst viele Schritte automatisiert, also ohne die Notwendigkeit des Eingreifens eines Benutzers, durchgeführt werden können. Die Verwendung eines separaten Roboter-Greifers birgt allerdings die Gefahr, dass beim Greifen der Träger verrutscht oder sogar vollständig aus den Greiferzangen auf die Arbeitsoberfläche fällt. In dem Dokument DE 10 2009 006 511 wird daher ein Träger für Pipettenspitzen vorgeschlagen, dessen Rahmen eine Taille oder vorspringende Greifränder aufweist. Beides begünstigt ein formschlüssiges und sicheres Greifen durch einen Roboter-Greifer und damit ein sicheres und genaues Positionieren. Nichts desto trotz ist ein separater Greifarm für das Greifen und Transportieren der Pipettenspitzenträger notwendig. Insbesondere, wenn mehrere Trägerplatten für Pipettenspitzen aus Platzgründen übereinander gestapelt sind, kann dies jedoch zu Problemen bei der Greifgenauigkeit führen. Zudem führt die Anwesenheit eines solchen separaten Roboter-Greifarms dazu, dass zusätzlicher Platz benötigt wird und dass andere robotisierte Arme des Systems weniger Bewegungsspielraum haben und somit in ihrer Einsatzfähigkeit beschränkt werden. Das Dokument EP 1 102 994 B1 wird als nächstliegender Stand der Technik betrachtet. Aus dem Dokument EP 1 102 994 B1 ist ein Gerät zum automatisierten Durchführen von Immunassay bekannt. Hier wird vorgeschlagen, dass an Stelle eines Roboterarms zum Bewegen von z.B. Mikroplatten eine integrale Klemme als Teil des Pipettiermechanismus selbst verwendet wird. Diese integrale Klemme erlaubt das Bewegen von z.B. Mikroplatten zwischen den verschiedenen Prozessier-Stationen durch den Pipettiermechanismus, muss aber in einen speziellen Aufnahmeblock geklemmt werden, der zuvor an einer zu transportierenden Mikroplatte oder einem anderen zu transportierenden Einwegartikel angebracht wurde. Dies bedeutet jedoch, dass sämtliche Artikel, welche mit der integralen Klemme transportiert werden sollen, zunächst mit dem komplementären Aufnahmeblock ausgestattet werden müssen, so dass ein zusätzlicher Kosten- und Zeitaufwand entsteht.

Das Dokument US 2012/0291872 A1 offenbart Laborartikel und Liquidhandling-Systeme sowie ein Transportwerkzeug zum Transportieren eines Laborartikels mit einer Pipette eines Pipettiersystems. Dieses Transportwerkzeug umfasst:
a) eine zum Eingehen einer lösbaren Steckverbindung mit einem Aufnahmeende einer Pipette des Pipettiersystems ausbildete Steckmuffe, die einen Innenraum, eine Muffenachse sowie eine Aufnahmeöffnung umfasst, durch welche Aufnahmeöffnung das Aufnahmeende einer Pipette des Pipettiersystems in den Innenraum der Steckmuffe einsteckbar ist;
b) einen Artikelhalter, welcher eine Halteachse und zumindest ein Haltemittel umfasst, das zum Bilden einer Tragverbindung mit einem Laborartikel ausgebildet ist, und
c) ein Verbindungsstück, welches den zumindest einen Artikelhalter mit der Steckmuffe an ihrem der Aufnahmeöffnung gegenüberliegenden Ende so verbindet, dass die Halteachse des zumindest einen Artikelhalters und die Muffenachse der Steckmuffe koaxial zueinander angeordnet sind.

Die Aufgabe der vorliegenden Erfindung ist es, ein alternatives Transportwerkzeug vorzuschlagen, mit welchem in einfacher und platzsparender Art und Weise Laborartikel von der Arbeitsfläche eines Pipettiersystems oder von sich auf dieser Arbeitsfläche befindlichen Einrichtungen aufgenommen, transportiert und abgelegt oder abgeworfen werden können.

Diese Aufgabe wird gemäss den Merkmalen der unabhängigen Ansprüche 1 und 2 erfüllt, indem ein Transportwerkzeug zum Transportieren eines Pipettenspitzenträgers oder einer Mikroplatte mit einer Pipette eines Pipettiersystems vorgeschlagen wird.

Weitere erfindungsgemässe Merkmale ergeben sich aus den abhängigen Ansprüchen 3 bis 11. Zudem wird ein erfindungsgemässes Verfahren gemäss Anspruch 13 zum Aufnehmen und/oder Transportieren und/oder Platzieren und/oder Abwerfen eines Pipettenspitzenträgers oder einer Mikroplatte mit einer Pipette eines Pipettiersystems vorgeschlagen, wobei ein an dieser Pipette befestigbares Transportwerkzeug nach Anspruch 1 oder 2 verwendet wird.

Weiterhin wird eine erfindungsgemässe Verwendung gemäss Anspruch 12 eines Transportwerkzeugs nach einem der Ansprüche 1 bis 11 zum Aufnehmen und/oder Transportieren und/oder Platzieren und/oder Abwerfen eines Pipettenspitzenträgers oder eine Mikroplatte mit einer Pipette eines Pipettiersystems vorgeschlagen. Im Sinne der vorliegenden Erfindung werden unter dem Begriff "Laborartikel" vorzugsweise Pipettenspitzenträger, Mikroplatten, Mikroplattendeckel, Deckel von Reagenzienbehältern oder Reagenzientrögen, Deckel zum Zudecken von staubempfindlichen Gelen und dergleichen verstanden. Ebenso als "Laborartikel" gelten Träger für Mikroplatten und Halterungen (z.B. sogenannte Racks) für Flüssigkeitsbehälter, wie Probenröhrchen und dergleichen. Die aus Gründen eines geringen Gewichts, einer guten chemischen Widerstandsfähigkeit und geringer Herstellungskosten vorzugsweise mittels Spritzguss aus Kunststoff gefertigten Laborartikel weisen vorzugsweise Öffnungen (wie z.B. Lageröffnungen für Pipettenspitzen in Pipettenspitzenträgern oder Wells von Mikroplatten), aufgesetzte Hohlzylinder und/oder oder ebene, zumindest annähernd horizontale Flächen auf. Im weitesten Sinne werden als "Laborartikel" alle Gegenstände aus Kunststoff oder Leichtmetallen bzw. deren Kombinationen betrachtet, welche in einem Pipettiersystem verwendet werden und ein Gesamtgewicht von weniger als etwa 400 g, bevorzugt von weniger als 200 g aufweisen.

Im Sinne der vorliegenden Erfindung werden unter dem Begriff "Einrichtungen" beispielsweise Vorrichtungen zum Bearbeiten oder Untersuchen von Elektrophorese-Gelen und Vorrichtungen zum präzisen Ausrichten von Mikroplatten (z.B. sogenannte Carrier) sowie weitere Vorrichtungen zum Aufbewahren, Bearbeiten und Analysieren von Proben verstanden.

Das erfindungsgemässe Transportwerkzeug vermittelt die folgenden Vorteile gegenüber dem Stand der Technik:
- Die Notwendigkeit, zum Aufnehmen und Transportieren von Laborartikeln einen zusätzlichen Greiferarm in den Arbeitsbereich des Pipettiersystems zu integrieren, entfällt. Dadurch kann für die übrigen Greiferarme mehr Bewegungsspielraum in dem Arbeitsbereich des Pipettiersystems einkalkuliert werden, was die Geometrie und Zeitdauer derer Einsatzmöglichkeiten erweitert.
- Das Bewegen von Laborartikeln zum Entsorgen oder anderweitigen Umpositionieren kann mittels der ohnehin bereits vorhandenen Pipetten des Pipettiersystems durchgeführt werden; das erfindungsgemässe Transportwerkzeug fungiert dabei als ein Kopplungsstück zwischen Pipette und Laborartikel. Die Pipette des Pipettiersystems kann dadurch selbst als ein Greifer-Ersatz verwendet werden.
- Das erfindungsgemässe Transportwerkzeug kann auch mit dem bereits vorhandenen Abwerfmechanismus für Pipettenspitzen wieder von der Pipette gelöst werden. Dadurch kann der gesamte Vorgang des Aufnehmens eines Transportwerkzeugs und eines Laborartikels bis hin zum Umpositionieren des Transportwerkzeugs mit angehängtem Laborartikel und das Abwerfen oder Absetzen einer Transportwerkzeug/Laborartikel-Kombination an einem vorbestimmten Ort vollständig automatisiert und damit ohne Eingreifen oder Kontrolle eines Benutzers erfolgen.
- Ist das Transportwerkzeug als ein Wegwerfartikel hergestellt und wird es auch als ein solcher verwendet, muss es nicht zur Wiederbenutzung vom Laborartikel getrennt werden sondern kann zusammen mit dem Laborartikel entsorgt werden.
- Ist der Laborartikel beispielsweise ein leerer Pipettenspitzenträger, so kann dieser nach dem Verwenden und Entsorgen der Wegwerfpipettenspitzen mit der gleichen Pipette des Pipettiersystems, mit welcher auch die Pipettenspitzen aufgenommen wurden, aufgenommen, transportiert und der Entsorgung zugeführt werden.

Die vorliegende Erfindung wird im Folgenden mittels dieser Annmeldung beigefügter Zeichnungen näher erläutert. Dabei offenbaren die Figuren in diesen Zeichnungen bevorzugte Ausführungsformen der Erfindung, ohne deren Umfang einzuschränken, da deren Einzelelemente je nach Bedarf miteinander kombiniert werden können. Es zeigt:
- Fig. 1: Übersichtszeichnungen zu einem Transportwerkzeug gemäss einer bevorzugten Ausführungsform, wobei:
Fig. 1A eine schematische Frontansicht, und
Fig. 1B einen vertikalen Querschnitt zeigt;
- Fig. 2: vertikale Querschnittszeichnungen jeweils durch ein Transportwerkzeug gemäss der vorliegenden Erfindung, durch das Aufnahmeende einer Pipette aus dem Stand der Technik, sowie durch eine Einwegpipettenspitze aus dem Stand der Technik;
- Fig. 3: einen vertikalen Querschnitt durch einen Pipettenspitzenträger mit:
- zwei eingesteckten Einwegpipettenspitzen aus dem Stand der Technik, wobei in eine dieser frei gelagerten Pipettenspitzen bereits das Aufnahmeende einer Pipette reibschlüssig eingesteckt ist und für die zweite Pipettenspitze eine Pipette angedeutet ist, welche zum Einstecken oberhalb dieser Pipettenspitze positioniert ist;
- einem Transportwerkzeug, welches reibschlüssig auf das Aufnahmeende einer Pipette aufgesteckt und zum Einstecken in eine freie Lageröffnung des Pipettenspitzenträgers oberhalb dieser Lageröffnung positioniert ist; und
- einem mittels einer Pipette bereits in eine freie Lageröffnung des Pipettenspitzenträgers eingesteckten Transportwerkzeug;

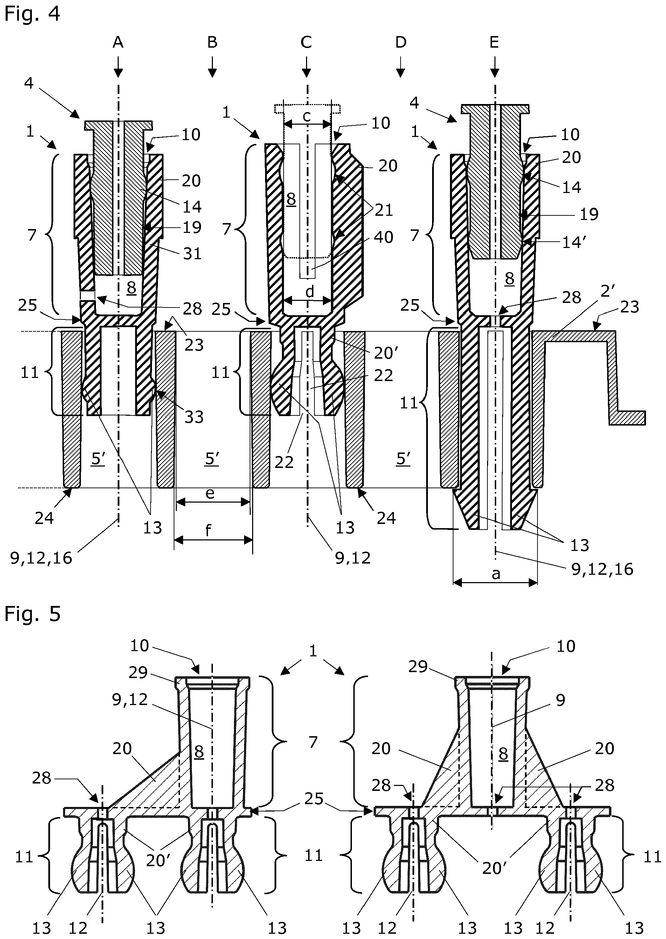

- Fig. 4: einen vertikalen Querschnitt durch einen Pipettenspitzenträger mit drei eingesteckten Transportwerkzeugen, wobei jedes Transportwerkzeug mit jeweils verschiedenen Ausführungsformen seiner wesentlichen Elemente gezeigt ist;
- Fig. 5: vertikale Querschnittszeichnungen durch zwei Transportwerkzeuge mit jeweils zwei Artikelhaltern in alternativen Ausführungsformen;

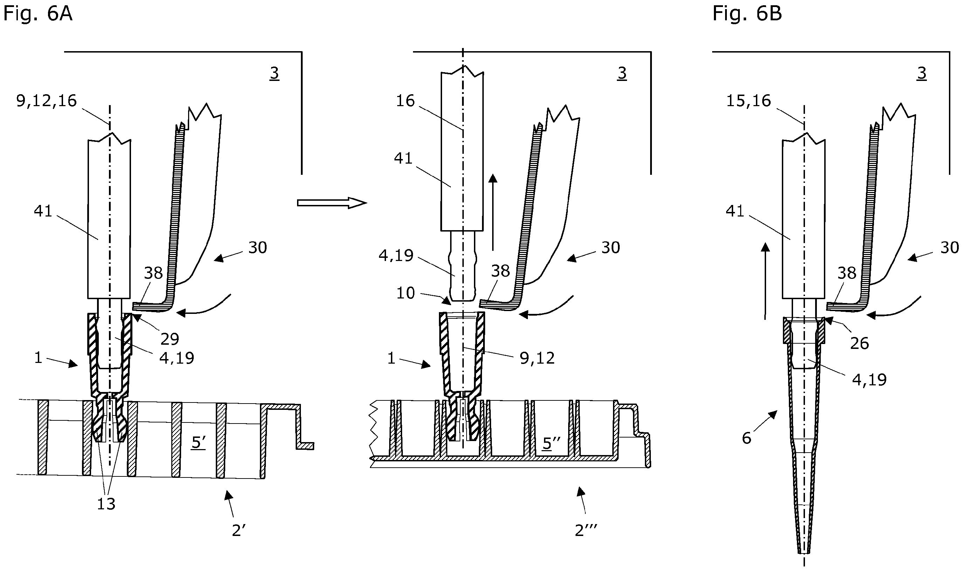

- Fig. 6: Übersichtszeichnungen über das Prinzip des Abwerfens eines auf eine Pipette aufgesteckten Transportwerkzeugs mit angestecktem Pipettenspitzenträger oder einer Einwegpipettenspitze, mit einem Abwerfmechanismus des Pipettiersystems, wobei:
Fig. 6A das Prinzip des Abwerfens eines auf eine Pipette aufgesteckten Transportwerkzeugs mit Pipettenspitzenträger bzw. Mikroplatte mittels des Abwerfmechanismus in zwei Stufen skizziert; und
Fig. 6B analog dazu eine Pipette mit aufgesteckter Einwegpipettenspitze und Abwerfmechanismus skizziert;

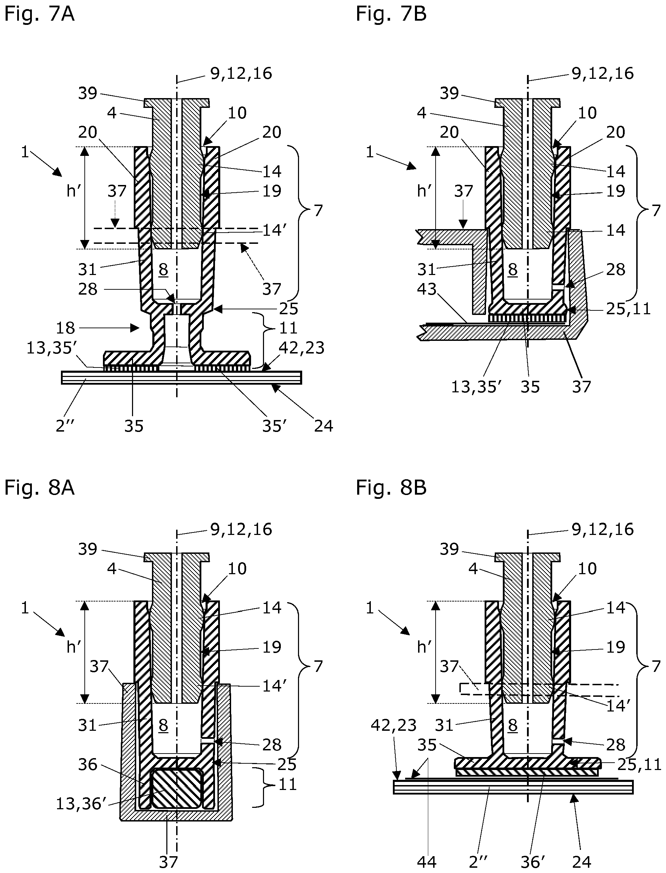

- Fig. 7: Vertikalschnitte durch zwei Transportwerkzeuge mit jeweils einem zum Eingehen einer Klebeverbindung ausgebildeten Artikelhalter, wobei:
Fig. 7A eine erste Variante mit einem ringförmigen Klebemittel; und
Fig. 7B eine zweite Variante mit einem kreisförmigen oder quadratischen Klebemittel zeigt;
- Fig. 8: Vertikalschnitte durch zwei Transportwerkzeuge mit jeweils einem zum Eingehen einer Magnetverbindung ausgebildeten Artikelhalter, wobei:
Fig. 8A eine erste Variante mit einem integrierten Permanentmagneten; und
Fig. 8B eine zweite Variante mit einem angeklebten Bandmagneten zeigt.

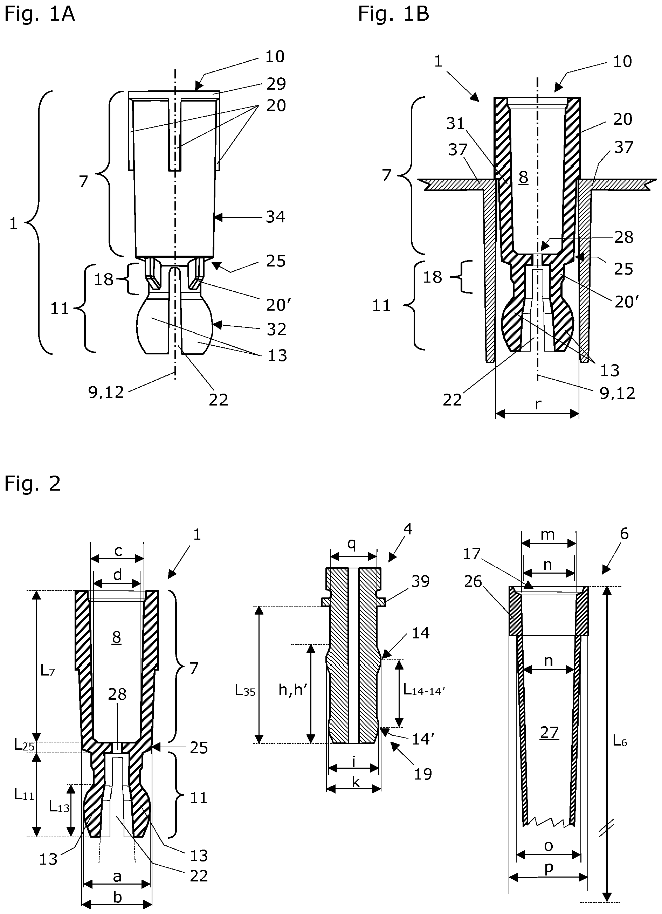

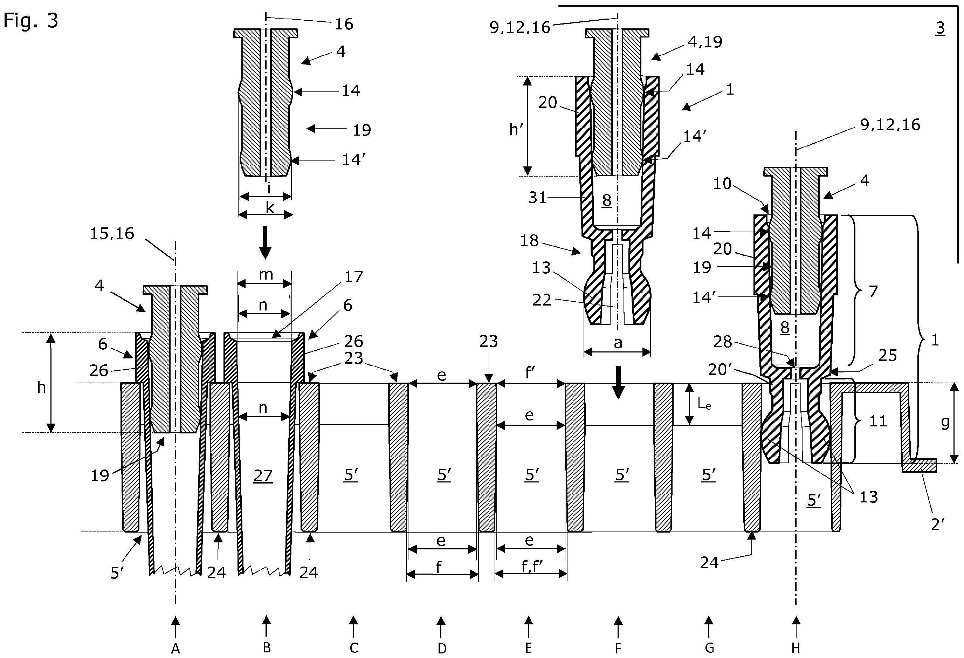

Die Figur 1A zeigt in einer vereinfachten, schematischen Frontansicht ein Transportwerkzeug gemäss der vorliegenden Erfindung in einer besonders bevorzugten Ausführungsform. Dieses Transportwerkzeug 1 ist ein länglicher Hohlkörper und so ausgebildet, dass es mit seinem ersten als Steckmuffe ausgebildeten Ende auf ein Aufnahmeende 19 einer Pipette 4 eines Pipettiersystems 3 aufsteckbar und zusätzlich mit seinem zweiten als Artikelhalter 11 ausgebildeten Ende in eine Öffnung 5 eines Laborartikels, wie z.B. in eine für Einwegpipettenspitzen 6 vorgesehene Lageröffnung 5' eines Pipettenspitzenträgers 2' einsteckbar ist. Das Transportwerkzeug umfasst zudem ein Verbindungsstück 25, welches die Steckmuffe 7 mit dem Artikelhalter 11 verbindet. Die Steckmuffe 7 umfasst eine Muffenachse 9, welche ihrer Längsachse entspricht. Der Artikelhalter 11 umfasst eine Halteachse 12, welche diejenige Achse definiert, entlang welcher eine Tragverbindung (hier eine Steckverbindung) zwischen dem Artikelhalter 11 des Transportwerkzeugs 2 und einer Lageröffnung 5' des Pipettenspitzenträgers 2' gebildet wird (vergleiche auch Figuren 3, 4 und 6).

Zum Aufstecken des Transportwerkzeugs 1 auf das Aufnahmeende 19 einer Pipette 4 mit seiner Steckmuffe 7 umfasst diese Steckmuffe 7 eine Aufnahmeöffnung 10, welche in einen Innenraum 8 mündet. Der Innenraum 8 der Steckmuffe 7 ist dabei so ausgebildet, dass das Transportwerkzeug 1 mittels der Steckmuffe 7 eine lösbare Steckverbindung mit einer eingesteckten Pipette 4 eingehen kann. Hierfür wird eine Pipette 4 eines Pipettiersystems 3 mit ihrem Aufnahmeende 19 durch die Aufnahmeöffnung 10 in den Innenraum 8 bis zu einer vordefinierten Eintauchtiefe h' (siehe Figuren 2-4) eingeführt. Ist der Innenraum 8 der Steckmuffe 7 korrekt an die Aussendimensionen des Aufnahmeendes 19 der Pipette 4 angepasst, wird zwischen der Steckmuffe 7 und der Pipette 4 die lösbare Steckverbindung gebildet, sobald die vordefinierte Eintauchtiefe erreicht ist (siehe auch die Figuren 3 und 4). Die Ausgestaltung des Innenraums 8 der Steckmuffe ist dabei so gewählt, dass das Transportwerkzeug 1 anstelle einer Einwegpipettenspitze 6 auf die gleiche Pipette 4 aufsteckbar und auch wieder abwerfbar ist, dass also zum Aufnehmen und Abwerfen des Transportwerkzeugs 1 die gleichen Geräteeinstellungen des Pipettiersystems 3 verwendet werden können, wie sie zum Aufnehmen und Abwerfen einer Einwegpipettenspitze programmiert wurden und verwendet werden können. So ist es bevorzugt, dass z.B. eine bestimmte Pipette 4 um die gleiche Eintauchtiefe h (siehe Seite 2-4) und mit der gleichen Kraft in eine bestimmte Einwegpipettenspitze 6 einführbar ist wie in das erfindungsgemässe Transportwerkzeug 1, welches dabei im Wesentlichen eine gleichartige lösbare Steckverbindung mit dem Aufnahmeende 19 der Pipette 4 eingeht.

Unter dem Begriff "Aufnahmeende 19 einer Pipette 4" wird im Zusammenhang mit der vorliegenden Erfindung derjenige Endbereich einer Pipette 4 eines Pipettiersystems 3 verstanden, der zum Bilden der lösbaren Steckverbindung mit einer Einwegpipettenspitze 6 oder mit einem Transportwerkzeug 1 gemäss der vorliegenden Erfindung vorgesehen ist.

Unter dem Begriff "lösbare Steckverbindung" wird im Zusammenhang mit der vorliegenden Erfindung auch eine bevorzugt dichtende Verbindung zwischen dem Aufnahmeende 19 einer Pipette 4 und einem an dieses angepassten Gegenstück (wie z.B. einer Einwegpipettenspitze 6 oder eines erfindungsgemässen Transportwerkzeugs 1) verstanden. Eine solche "lösbare Steckverbindung" entsteht, wenn die beiden Teile in eine definierte Position zueinander gebracht werden. Neben einer Dichtfunktion weist eine solche, aus dem Stand der Technik bezüglich Einwegpipettenspitzen an sich bekannte, lösbare Steckverbindung zudem eine Haltefunktion auf. Dank dieser Haltefunktion wird dabei eine aufgesteckte Pipettenspitze weiterhin dichtend auf dem Aufnahmeende 19 einer Pipette 4 gehalten, auch wenn die Pipette 4 mittels eines Roboter-Mechanismus zwischen verschiedenen X/Y/Z-Positionen auf dem Arbeitsfeld des Pipettiersystems 3 hin- und herbewegt wird.

Tatsächlich konnte bei einem so ausgestalteten Transportwerkzeug 1 festgestellt werden, dass es wie eine bekannte Einwegpipettenspitze 6 für einen bestimmten Pipettentyp eines bestimmten Pipettiergeräts 3 aufnehmbar und abwerfbar ist, und dass die Dicht- und Haltekraft der gebildeten, lösbaren Steckverbindung ausreichend ist, um auch ein solches Transportwerkzeug 1 plus dem zusätzlichen Gewicht eines daran hängenden Pipettenspitzenträgers 2', wie er ebenfalls aus dem Stands der Technik bekannt ist, mittels dieser Pipette 4 hochzuheben und auf dem Arbeitsfeld umzupositionieren.

Für die Funktion des erfindungsgemässen Transportwerkzeugs 1 an sich ist dabei - im Gegensatz zur Einwegpipettenspitze 6 - die Dichtwirkung der lösbaren Steckverbindung nicht ausschlaggebend. Sie wird jedoch inhärent ebenfalls bereitgestellt, da das Transportwerkzeug 1 gleich wie und anstelle einer Einwegpipettenspitze 6 für die gleiche Pipette 4 aufnehmbar und abwerfbar sein soll, also die gleichen Geräteeinstellungen zum Aufnehmen und Abwerfen verwendbar sind.

Im Rahmen der vorliegenden Erfindung ist eine solche Steckverbindung zwischen dem erfindungsgemässen Transportwerkzeug 1 und dem Aufnahmeende 19 einer Pipette 4 eine lösbare Tragverbindung, wenn diese beiden Bauteile mittels eines Abwerfmechanismus des Pipettiersystems 3 wieder voneinander trennbar sind. Die Kraft, die aufgewendet werden muss um eine Pipettenspitze 6 oder ein Transportwerkzeug 1 abzuwerfen, entspricht ca. 205 g bis 400 g. Erfahrungsgemäss eignet sich deshalb ein erfindungsgemässes Transportwerkzeug 1 zum Aufnehmen und Transportieren von Laborartikeln mit einem Gesamtgewicht von bis zu 400 g, wobei das Aufnehmen und Transportieren von Laborartikeln mit einem Gesamtgewicht von maximal 205 g bis 400 g speziell bevorzugt ist.

Wie aus dem Stand der Technik bezüglich Einwegpipettenspitzen 6 bekannt ist, kann eine solche lösbare Steckverbindung formschlüssig, kraftschlüssig oder eine Kombination von Form- und Kraftschluss sein. Insbesondere zum Verbessern einer kraft-/ reibschlüssigen Verbindung kann dabei vorgesehen sein, dass eine zusätzliche, die Reibung erhöhende Oberfläche an dem entsprechenden Bereich des Transportwerkzeugs 1 vorgesehen ist. Dies gilt sowohl für eine Oberfläche des Innenraums 8 der Steckmuffe 7, als auch für eine Aussenseite 32 des zumindest einen Haltemittels 13 des Artikelhalters 11.

Mit einem aufgesteckten, erfindungsgemässen Transportwerkzeug 1 kann eine Pipette 4 dann verwendet werden, um z.B. einen leeren Pipettenspitzenträger 2' aufzunehmen und auf dem Arbeitsfeld des Pipettiersystems 3 umzupositionieren. Dazu wird das auf die Pipette 4 aufgesteckte Transportwerkzeug 1 zusätzlich in eine freie Lageröffnung 5' eines Pipettenspitzenträgers 2' eingesteckt, so dass es diesen Pipettenspitzenträger 2' an die Pipette 4 koppelt. Alternativ kann das Transportwerkzeug 1 an einen anderen Laborartikel 2 angekoppelt werden, der eine in den Dimensionen zu den Lageröffnungen 5' analog dimensionierte Öffnung 5 besitzt oder einen aufgesetzten Zylinder mit analogen Innendimensionen aufweist (nicht gezeigt).

Es ist ebenfalls denkbar, dass das Transportwerkzeug 1 zur Kopplung mit anderen Laborartikeln 2 ausgebildet ist, z.B. an Mikroplatten 2'" (deren Wells 5" als Öffnung 5 zum Einstecken eines Artikelhalters 11 dienen), Deckel von Mikroplatten oder andere Behälter, wenn sein Artikelhalter 11 in seiner Form oder Dimension entsprechend angepasst würde.

Zum Einstecken des Transportwerkzeugs 1 in eine freie Lageröffnung 5' eines Pipettenspitzenträgers 2' mit seinem Artikelhalter 11 umfasst dieser zumindest ein Haltemittel 13. Dieses Haltemittel 13 ist so ausgebildet, dass es, wenn das Transportwerkzeug 1 genügend weit in die freie Lageröffnung 5 eingeführt wurde, mit dieser Lageröffnung 5 eine Steckverbindung eingeht.

Unter dem Begriff "Steckverbindung" wird - im Zusammenhang mit der Tragverbindung zwischen dem erfindungsgemässen Transportwerkzeug 1 und einem Pipettenspitzenträger 2' - eine Steckverbindung verstanden, welche vor allem eine Haltefunktion zwischen dem Transportwerkzeug 1 und diesem Laborartikel 2 übernimmt. Dabei soll vor allem gesichert sein, dass, wenn das Transportwerkzeug 1 sowohl auf eine Pipette 4 aufgesteckt ist, als auch in eine freie Lageröffnung 5' eines Pipettenspitzenträgers 2' eingesteckt ist, die Verbindung zwischen Werkzeug 1 und Träger 2' und zwischen Werkzeug 1 und Pipette 4 sich nicht allein durch das Gewicht des Trägers 2' wieder löst, sobald die Pipette 4 das Transportwerkzeug 1 und den Pipettenspitzenträger 2' anhebt und umpositioniert.

Im Zusammenhang mit der vorliegenden Erfindung kann diese Steckverbindung zwischen dem zum zumindest einen Haltemittel 13 und dem Pipettenspitzenträger 2' beispielsweise durch Reibung zwischen zumindest einer Teilfläche der Aussenseite 32 des Haltemittels 13 und zumindest einer Teilfläche der Innenseite der freien Lageröffnung 5 des Pipettenspitzenträgers 2' vermittelt werden. Wie bereits erwähnt kann dazu eine die Reibung erhöhende Oberfläche an der Aussenseite 32 des Haltemittels 13 bereitgestellt werden. Alternativ kann für das Bilden dieser Steckverbindung auch zwei Haltemittel 13 verwendet werden, welche einen fingerförmigen Schnapphaken bilden, der die Lageröffnung 5 vollständig durchdringt und dann die Unterseite 24 des Pipettenspitzenträgers 2' beaufschlägt (siehe Figur 4, Position E). Auch für diese Steckverbindung gilt also, dass sie, wie aus dem Stand der Technik bekannt, kraftschlüssig oder formschlüssig oder eine Kombination von Kraft- und Formschluss sein kann.

Alternativ zum Halten durch rein mechanische Reibung oder einen Schnappverschluss kann auch eine Klebeverbindung, z.B. gemäss den Figuren 7A und 7B vorgesehen sein. In diesem Falle weist das Haltemittel 12 des Artikelhalters 11 eine nach unten, von der Steckmuffe 7 des Transportwerkzeugs 1 wegweisende, zumindest annähernd rechtwinklig zur Längsachse 16 der Pipette 4 bzw. der Halteachse 12 stehende, ebene Halteplatte 35 auf, die mit einem Klebemittel 35' versehen ist. Dieses Klebemittel 35' ist bevorzugt ausgewählt aus einer Gruppe von Klebemitteln, die Trockenkleber und Druckkleber umfasst, wobei die Verwendung solcher Kleber einem Fachmann aus anderen Gebieten der Technologie (wie z.B. aus dem Hochbau oder Modellbau) an sich bekannt ist. Wie in Fig. 7A gezeigt, kann die Halteplatte 35 mittels eines Halsstücks 18 von der Steckmuffe 7 und dem Verbindungsstück 25 abgesetzt sein. Alternativ dazu kann, wie in Fig. 7B gezeigt, die Halteplatte 35 als radiale Verlängerung des Verbindungsstücks 25 ausgebildet sein. Zum Vermeiden des Entstehens eines Überdrucks im Innenraum 8 der Steckmuffe 7 beim Einstecken des Aufnahmeendes 19 der Pipette 4 oder eines Unterdrucks im Innenraum 8 der Steckmuffe 7 beim Abwerfen des Transportwerkszeugs 1 umfasst dieses bevorzugt ein Lüftungsloch 28, dessen Anordnung sich beispielsweise und bevorzugt nach der Ausbildung der Halteplatte 35 richtet (vgl. Fig. 7A und 7B). Damit zwischen dem Transportwerkzug 1 und einem zu transportierenden Laborartikel 2 eine tragfähige Klebeverbindung entstehen kann, weist der Laborartikel 2 bevorzugt eine saubere, ebene Kontaktfläche auf, zu der die Halteplatte 35 parallel ausgerichtet ist und die zumindest annähernd rechtwinklig zur Halteachse 12 des Artikelhalters 11 ausgerichtet ist.

Bevorzugt wird, dass die Halteachse 12 des Artikelhalters 11 vertikal und die die Halteplatte 35 horizontal ausgerichtet ist.

Ebenfalls alternativ zum Halten durch rein mechanische Reibung oder einen Schnappverschluss kann auch eine Magnetverbindung, z.B. gemäss den Figuren 8A und 8B vorgesehen sein. In diesem Falle weist das Haltemittel 13 des Artikelhalters 11 eine nach unten, von der Steckmuffe 7 des Transportwerkzeugs 1 wegweisende, zumindest annähernd rechtwinklig zur Längsachse 16 der Pipette 4 bzw. der Halteachse 12 stehende, ebene Halteplatte 35 (vgl. Fig. 8B) oder eine Haltehülse 36 auf, die mit einem Magnetmittel 36' versehen ist. Dieses Magnetmittel 36' ist bevorzugt ein Permanentmagnet, beispielsweise in der Form eines zylindrischen Magnetkörpers (vgl. Fig. 8A), der in der Haltehülse 36 des Transportwerkzeugs 1 angeklebt oder befestigt ist. Alternativ wird als Magnetmittel 36' ein flächig wirkender Magnetstreifen bevorzugt, der auf der vorzugsweise horizontal ausgerichteten Halteplatte 35 befestigt ist (vgl. Fig. 8B). Damit zwischen dem Transportwerkzug 1 und einem zu transportierenden Laborartikel 2 eine tragfähige Magnetverbindung entstehen kann, weist der Laborartikel 2 bevorzugt eine saubere, ebene Kontaktfläche auf, die zumindest annähernd rechtwinklig zur Halteachse 12 des Artikelhalters 11 ausgerichtet ist. Auf dieser Kontaktfläche des Laborartikels 2 wird bevorzugt eine magnetisierbare Folie 44 oder ein Magnetstreifen befestigt, mit welchen das Magnetmittel 36' des Transportwerkzeugs 1 in magnetische Wechselwirkung treten und dadurch das Transportwerkzeug 1 den Laborartikel 2 anheben kann.

Zum Vermeiden des Entstehens eines Überdrucks im Innenraum 8 der Steckmuffe 7 beim Einstecken des Aufnahmeendes 19 der Pipette 4 oder eines Unterdrucks im Innenraum 8 der Steckmuffe 7 beim Abwerfen des Transportwerkszeugs 1 umfasst dieses bevorzugt ein Lüftungsloch 28, dessen Anordnung sich beispielsweise und bevorzugt nach der Ausbildung und Anordnung der Halteplatte 35 richtet (vgl. Fig. 7A, 7B, 8A und 8B).

Im Gegensatz zu der lösbaren Steckverbindung, die zwischen dem Transportwerkzeug 1 und dem Aufnahmeende 19 einer Pipette 4 gebildet wird, muss jedoch die Steckverbindung zwischen dem Transportwerkzeug 1 und einem Laborartikel 2, wie z.B. einem Pipettenspitzenträger 2' nicht lösbar sein. Die wichtige Funktion dieser Steckverbindung ist, wie oben erwähnt, die Haltefunktion bzw. Tragfunktion. Ob diese Steckverbindung lösbar sein soll oder nicht, hängt vor allem davon ab, ob das Transportwerkzeug 1 z.B. zur Wiederverwendung vom Laborartikel 2 wieder lösbar sein soll oder nicht. Eine solche Lösbarkeit der Tragverbindung zwischen Transportwerkzeug 1 und Laborartikel 2 ist typischerweise bei einer Steckverbindung gegeben, wie diese in den Figuren 3, 4 (Positionen C und E) 5 und 6 gezeigt sind. Eine Lösbarkeit dieser Tragverbindung ist auch bei Magnetverbindungen gegeben, wie diese in den Figuren 8A und 8B gezeigt sind. Bei Tragverbindungen zwischen Transportwerkzeug 1 und Laborartikel 2, die auf einer Klebeverbindung beruhen (vgl. Fig. 7A und 7B) kann normalerweise nicht von einer Lösbarkeit ausgegangen werden.

Dem Fachmann sind die verschiedenen möglichen Ausführungsformen bezüglich der Dichtfunktion, der Haltefunktion bzw. Tragfunktion und der Lösbarkeit an sich bekannt, so dass diese nicht weiter diskutiert werden sollen.

Das in den Figuren 1A und 1B gezeigte Transportwerkzeug 1 in der besonders bevorzugten Ausführungsform umfasst einen Artikelhalter 11 mit einem Haltemittel 13. Mit diesem Haltemittel 13 ist das Transportwerkzeug 1 beispielsweise in eine freie Lageröffnung 5 eines Pipettenspitzenträgers 2' reibschlüssig einsteckbar. In dieser besonders bevorzugten Ausführungsform ist das eine Haltemittel 13 im Wesentlichen kugelförmig ausgebildet. Alternativ kann das Haltemittel 13 auch z.B. ellipsoidförmig oder eiförmig ausgebildet sein. Besonders bevorzugt ist hier, dass das Haltemittel 13 zumindest einen Schlitz 22 umfasst. Der Schlitz 22 erstreckt sich ausgehend von dem dem Verbindungsstück 25 gegenüberliegenden Ende des Artikelhalters 11 in Richtung des Verbindungsstücks 25 und geht über die grösste Querausdehnung des Artikelhalters 11 in Bezug auf dessen Halteachse 12 hinaus. Dieser Schlitz 22 vermittelt dem Haltemittel 13 eine Federfunktion, so dass das Transportwerkzeug 1 mit seinem Artikelhalter 11 unter elastischer Verformung der Haltemittel 13 in eine Lageröffnung 5 des Pipettenspitzenträgers 2' reibschlüssig einsteckbar ausgebildet ist.

In der in den Figuren 1A und 1B gezeigten Ausführungsform ist das im Wesentlichen kugelförmige Haltemittel 13 über ein schmaleres Halsstück 18 des Artikelhalters 11 mit dem Verbindungsstück 25 verbunden. Bevorzugt erstreckt sich der zumindest eine Schlitz 22 über die grösste Querausdehnung des Artikelhalters 11 in Bezug auf dessen Halteachse 12 bis in das schmalere Halsstück 18 hinein. Diese Kombination von geschlitztem, schmalerem Halsstück 18 und ebenfalls geschlitztem, im wesentlichen kugelförmigen Haltemittel 13 erhöht die Federwirkung des Haltemittels und erleichtert damit das Einstecken des Transportwerkzeugs 1 in die Lageröffnung 5. Eine erhöhte Federkraft verbessert das Halten des kugelförmigen Haltemittels 13 in der Lageröffnung 5 und die Transportierbarkeit des Pipettenspitzenhalters 2 mit dem Transportwerkzeug 1 und der Pipette 4 des Pipettiersystems 3.

In einer besonders bevorzugten Ausführungsform erstreckt sich der Schlitz 22 entlang der Richtung der Halteachse 12 des Artikelhalters 11. Alternativ kann sich der Schlitz 22 auch in einem Winkel zu der Halteachse 12 des Artikelhalters 11 erstrecken. Zudem kann sich der Schlitz 22 in einer geraden Linie oder alternativ in einer von einer Gerade abweichenden Linie erstrecken. Besonders bevorzugt erstreckt sich jedoch der Schlitz 22 entlang einer Geraden und entlang der Richtung der Halteachse 12 des Artikelhalters 11.

Ist das zumindest eine Haltemittel 13 des Artikelhalters 11 des Transportwerkzeugs 1 wie in den Figuren 1A und 1B im wesentlichen kugelförmig ausgebildet und umfasst den Schlitz 22 wie oben beschrieben, basiert die gebildete, lösbare Steckverbindung im wesentlichen auf einem lösbaren Reibschluss. Der Reibschluss erfolgt in diesem Fall zwischen dem Bereich der Aussenseite 32 der Haltekugel 13 mit der grössten Querausdehnung in Bezug auf die Halteachse 12 und der Innenoberfläche der freien Lageröffnung 5 des Pipettenspitzenträgers 2'. Weitere Details zum Einführen und Halten des Transportwerkzeugs in einer freien Lageröffnung 5 werden im Zusammenhang mit den Figuren 3 und 4 besprochen.

Das Transportwerkzeug 1 umfasst zudem ein Verbindungsstück 25, welches den Artikelhalter 11 mit der Steckmuffe 7 an ihrem ihrer Aufnahmeöffnung 10 gegenüberliegenden Ende verbindet. Damit ist das Transportwerkzeug 1 mit seiner einen Seite auf die Pipette 4 eines Pipettiersystems aufsteckbar, und mit seiner anderen Seite in eine freie Lageröffnung 5 eines Pipettenspitzenträgers 2' einsteckbar. So kann eine bereits vorhandene Pipette 4 des Pipettiersystems 3 beispielsweise dazu genutzt werden, einen leeren Pipettenspitzenträger 2' von seiner aktuellen Position hochzuheben, zu einer anderen Position, z.B. einer Entsorgungsstation, zu transportieren und diesen leeren Pipettenspitzenträger 2' dort abzuwerfen.

Diese Nutzung der bereits am Pipettiergerät vorhandenen Pipette 4 kann erfolgen, ohne dass ein zusätzlicher Greifarm notwendig ist, und ohne dass weitere Modifikationen am Pipettiersystem 3 erforderlich sind. Dies ist möglich, weil das Transportwerkzeug 1 so strukturiert und dimensioniert ist, dass es - mit den gleichen Einstellungen am Gerät - einfach anstelle einer Einwegpipettenspitze 6 auf die Pipette 4 aufsteckbar ist und zusätzlich so in eine freie Lageröffnung 5 eines Pipettenspitzenträgers 2' eingreift, dass es beim Anheben der Pipette 4 ebenfalls den Pipettenspitzenträger 2' entsprechend anhebt. Durch die entsprechende Bewegung der Pipette 4 kann dann der angehobene Pipettenspitzenträger 2' an die gewünschte Position gebracht werden. Mit dem ebenfalls bereits vorhandenen Abwerfmechanismus 30 kann dann das Transportwerkzeug 1 mitsamt dem angesteckten Pipettenspitzenträger 2' (vgl. Fig. 6A) bzw. mit der angesteckten Mikroplatte 2'" (vgl. Fig. 6B) unter Anwendung der gleichen Einstellungen wie für das Abwerfen einer Einwegpipettenspitze 6 an dieser gewünschten Position abgeworfen werden.

Einwegpipettenspitzen 6 sind dem Fachmann aus dem Stand der Technik bekannt. Dabei sind unter Einwegpipettenspitzen 6 solche Pipettenspitzen zu verstehen, welche in der Regel für nur einen Pipettiervorgang oder für möglichst wenig Pipettiervorgänge verwendet werden und nach Gebrauch wieder entsorgt werden. Solche Einwegpipettenspitzen 6 können dabei, wie erwähnt, kraft- oder formschlüssig, oder in einer Kombination von Kraft- und Formschluss, jedoch immer dichtend auf eine Pipette 4 gesteckt werden.

Das in der Figur 1 gezeigte Transportwerkzeug 1 umfasst zudem an seinem Ende mit der Aufnahmeöffnung 10 einen Kragen 29. Dieser Kragen 29 umläuft die Aussenseite der Steckmuffe 7 an ihrer obersten Kante bevorzugt vollständig. Er stellt eine vergrösserte Oberfläche an der Oberseite der Steckmuffe 7 bereit, welche besonders gut durch einen Abwerfmechanismus 30 des Pipettiersystems 3 beaufschlagbar ist. Die Verwendung eines Kragens 29 ist dem Fachmann aus dem Stand der Technik bei der Gestaltung von Pipettenspitzen 6 an sich bekannt. Das Anbringen eines solchen Kragens bei Pipettenspitzen 6 ist bevorzugt, um eine vergrösserte Oberkante bereitzustellen, so dass das Beaufschlagen durch einen Abwerfmechanismus vereinfacht wird, und um der Pipettenspitze zusätzliche Stabilität zu verleihen, wenn sie z.B. mit Kraft auf das Aufnahmeende 19 einer Pipette 4 aufgenommen wird. Das Anbringen eines Kragens 29 bei Einwegpipettenspitzen 6 ebenso wie bei einem erfindungsgemässen Transportwerkzeug 1 ist optional und von den Anforderungen an die Pipettenspitze 6 bzw. an das Transportwerkzeug 1 abhängig. Die Entscheidung darüber, ob ein Kragen 29 an der Steckmuffe 7 des Transportwerkzeugs 1 angebracht sein soll, ebenso wie die Wahl der Dicke und Höhe des Kragens 29, liegt im Wissen des Fachmanns und richtet sich zudem nach der Ausgestaltung des Abwurfmechanismus 30 des zu verwendenden Pipettiersystems 3. In der besonders bevorzugten Ausführungsform gemäss der Figur 1 umfasst das Transportwerkzeug 1 einen Kragen 29.

Ebenfalls optional, aber besonders bevorzugt ist die Verwendung von zumindest zwei Verstärkungsstreben 20 an der Aussenseite 34 der Steckmuffe 7. Bevorzugt erstreckt sich jede Verstärkungsstrebe 20 in Richtung der Muffenachse 9. Zusätzlich können weitere Verstärkungsstreben 20' am Transportwerkzeug 1 vorgesehen sein, z.B. wenn, wie in der hier gezeigten, besonders bevorzugten Ausführungsform ein schmaleres, zum Teil geschlitztes Halsstück 18 vorgesehen ist.

Auch die Verwendung von Verstärkungsstreben 20,20' ist dem Fachmann aus dem Stand der Technik bei der Gestaltung von Einwegpipettenspitzen 6 an sich bekannt. Das Anbringen von Verstärkungsstreben bei Einwegpipettenspitzen 6 ist bevorzugt, um ihr z.B. in ihrem oberen Bereich eine erhöhte Stabilität zu verleihen. Dies ist besonders vorteilhaft, um eventuelle Verformungen der Pipettenspitze 6 durch das Einführen des Aufnahmeendes 19 der Pipette 4 zum dichtenden Einstecken zu verhindern bzw. zumindest zu minimieren. Eine solche Verformung könnte tatsächlich den Dichteffekt zwischen dem Innenraum 27 der Einwegpipettenspitze 6 und der Aussenseite des Aufnahmeendes 19 der Pipette 4 beeinträchtigen, was wiederum eine Beeinträchtigung der Präzision des Aspirier- und Dispensiervorgangs zur Folge hätte. Zudem können bei einer möglichst geringen Verformung durch das Beaufschlagen eines Abwerfmechanismus 30 die notwendigen Einstellungen im Pipettiersystem 3, wie z.B. die maximal notwendige Kraft zum Lösen einer bestimmten Einwegpipettenspitze 6 von der Pipette 4, einfacher standardisiert werden.

Zusätzlich werden Verstärkungsstreben 26 bei Einwegpipettenspitzen 6 genutzt, um diese in einer Lageröffnung 5 eines Pipettenspitzenträgers 2' zu halten bzw. um die Einwegpipettenspitzen 6 auf der Oberfläche des Pipettenspitzenträgers 2' abzustützen. Dazu sollte die Pipettenspitze 6 zumindest drei Verstärkungsstreben 26 umfassen, welche, wenn die Pipettenspitze 6 im Pipettenspitzenträger 2' gelagert ist, dessen Oberfläche beaufschlagen. Mindestens drei solcher Verstärkungsstreben sind nötig, damit die Spitze ohne zu kippen in dem Pipettenspitzenträger 2' stehen kann.

Entsprechend können Verstärkungsstreben 20,20' auch bei dem erfindungsgemässen Transportwerkzeug verwendet werden. Die Wahl von Anzahl, Dicke, Form und Länge von Verstärkungsstreben 20 sowie deren Anordnung an dem erfindungsgemässen Transportwerkzeug 1 liegt dabei im Wissen des Fachmanns. Besonders bevorzugt umfasst jedoch die Steckmuffe 7 zumindest drei Verstärkungsstreben 20 an ihrer Aussenseite 34, welche sich in Richtung der Muffenachse 9 erstrecken, und welche zumindest annährend gleichmässig am Umfang der Steckmuffe 7 verteilt sind. Mit der Unterseite dieser Verstärkungsstreben 20 schlägt das Transportwerkzeug 1 auf eine Oberfläche eines Werkzeugträgers 37 zum Lagern und Bereitstellen von Transportwerkzeugen 1 auf.

In der Figur 1B ist das Transportwerkzeug 1 gemäss der besonders bevorzugten Ausführungsform in einer vertikalen Querschnittszeichnung dargestellt, wie es in einem speziellen Werkzeugträger 37 gelagert ist. Der Werkzeugträger 37 umfasst - analog zu einem Pipettenspitzenträger 2' - ebenfalls Lageröffnungen, in denen jeweils ein Transportwerkzeug 1 gelagert und für den Gebrauch bereitgestellt wird. Gut zu erkennen ist hier, wie das Transportwerkzeug 1 mit den Unterseiten der Verstärkungsstreben 20 eine Oberseite des Werkzeugträgers 37 beaufschlägt und so dort "stehend" gehalten wird. Bevorzugt sind dies die einzigen Kontaktstellen zwischen Transportwerkzeug 1 und seinem Werkzeughalter 37: Die Lageröffnung des Werkzeugträgers, insbesondere ihr Innendurchmesser r, ist so an die äusseren Dimensionen des Transportwerkzeugs 1 angepasst, dass ihre Innenoberfläche beim Lagern eines Transportwerkzeugs 1 nicht von diesem kontaktiert werden, so dass das Transportwerkzeug 1 möglichst widerstandsfrei von einer Pipette 4 aus dem Werkzeugträger 37 herausgehoben werden kann.

Der Innendurchmesser r der Lageröffnung im Werkzeugträger 37 für das Transportwerkzeug 1 ist dem tatsächlichen Aussendurchmesser a des Artikelhalters 11 bzw. dessen Haltemittel 13 angepasst. Beispielhafte Masse sind:
a: 7.18 mm (= Aussendurchmesser des kugelförmigen Haltemittels 13);
r: 7.6 + 0.05 mm (= Innendurchmesser der Lageröffnung).

Die Gestaltung des Werkzeughalters 37 zum Lagern des Transportwerkzeugs 1 ist für die Funktion des Transportwerkzeugs 1 selbst nicht relevant. Allerdings kann beispielsweise vorgesehen sein, dass der Werkzeughalter 37 auf solchen Positionen auf dem Arbeitsfeld eines Pipettiersystems 3 positionierbar ist, die ursprünglich z.B. für einen Behälter zum Bereitstellen von grösseren Flüssigkeitsvolumina (z.B. 25-150 ml) vorgesehen waren., So kann auch die Lagerung des Transportwerkzeugs 1 bzw. einer grösseren Anzahl von Transportwerkzeugen 1 platzsparend erfolgen. Beispielhaft sei hier weiter erwähnt, dass ein solcher Werkzeughalter 37 so ausgebildet sein könnte, dass er 16 Transportwerkzeuge 1 aufnehmen kann. Diese 16 Transportwerkzeuge 1 genügen beispielsweise, um vier Stapel mit je fünf Pipettenspitzenträgern 2' abzuarbeiten, also umzupositionieren (vorausgesetzt, dass jeweils der unterste Pipettenspitzenträger 2' immer am Ort bleibt).

Zusätzlich kann der Figur 1B entnommen werden, dass das Transportwerkzeug 1 als ein Hohlkörper ausgebildet ist; so ist die Ausbildung des Innenraums 8 der Steckmuffe 7 dieser Querschnittszeichnung gut zu entnehmen. In dieser besonders bevorzugten Ausführungsform ist der Innenraum 8 der Steckmuffe konisch zum Verbindungsstück 25 zulaufend ausgebildet. Diese Ausführungsform ist bevorzugt, wenn das Transportwerkzeug 1 auf ein konisch zulaufendes Aufnahmeende 19 einer Pipette 4 aufsteckbar sein soll. Tatsächlich sind solche konisch zulaufend ausgebildeten Aufnahmeenden 19 eine häufig verwendete Form des Pipettenendes, da es in Kombination mit den leicht herstellbaren Einwegpipettenspitzen mit Innenkonus einfach und zuverlässig eine lösbare, reibschlüssige und dichtende Steckverbindung ausbilden kann. Solche konisch zulaufenden Aufnahmeenden 19 von Pipetten 4 werden im Stand der Technik auch abgekürzt "Aufnahmekonen" benannt und werden im Zusammenhang mit der Figur 2 näher beschrieben.

Alternativ kann vorgesehen sein, dass der Innenraum 8 der Steckmuffe 7 zylindrisch ausgebildet ist; dies ist beispielsweise dann bevorzugt, wenn das Aufnahmeende 19 der Pipette 4 ebenfalls zylindrisch ausgebildet ist und eine formschlüssige, lösbare Steckverbindung vorgesehen ist (siehe hierzu auch Figur 4 und die entsprechende Diskussion).

Besonders bevorzugt ist jedoch, dass der Innenraum 8 der Steckmuffe 7 konisch zulaufend ausgebildet ist, wobei die Aufnahmeöffnung 10 für die Pipette 4 an dem breiteren Ende und das Verbindungsstück 25 an dem engeren Ende des Innenraums 8 angeordnet ist. So ist die Steckmuffe 7 auf das Aufnahmeende 19 der Pipette 4 reibschlüssig aufsteckbar, wenn dieses ebenfalls konisch zulaufend ausgebildet ist, z.B. wenn das Aufnahmeende 19 eine zum Ende der Pipette beabstandete ringförmige Erhebung 14 aufweist (vgl. Fig. 2 und 3).

Wie oben erwähnt ist der Innenraum 8 der Steckmuffe 7 so an das Aufnahmeende 19 einer Pipette 4 angepasst, dass das Transportwerkzeug 1 wie eine Einwegpipettenspitze 6 von dem gleichen Pipettentyp aufgenommen, gehalten und gelöst werden kann. Es ist dem Fachmann an sich bekannt, dass der Innenraum 27 von solchen Einwegpipettenspitzen 6 derart ausgestaltet ist, dass bei eingesteckter Pipette 4 nicht nur die Einwegpipettenspitze 6 sicher auf der Pipette 4 gehalten wird, sondern dass zudem eine Abdichtung zwischen Pipette 7 und Pipettenspitze 6 erfolgt. Nur, wenn die Pipette 4 den Innenraum 27 der Einwegpipettenspitze 6 dichtend verschliesst, kann ein exaktes Aspirieren und Dispensieren durch das Pipettiergerät 3 gewährleistet werden. Für die Funktion als Kopplung zwischen einer Pipette 4 und einem Transportwerkzeug 1 ist der dichtende Verschluss des Innenraums durch die Pipette 4 an sich nicht notwendig. Er ergibt sich jedoch indirekt aus den Anforderungen, dass das Transportwerkzeug 1 ein möglichst gleicher Art und Weise auf der Pipette 4 gehalten und wieder gelöst werden kann wie eine entsprechende Pipettenspitze.

In der Figur 1B sind zudem die Positionen der Muffenachse 9 der Steckmuffe 7 und der Halteachse 12 des Artikelhalters 11 zu entnehmen. In dieser gezeigten, besonders bevorzugten Ausführungsform verbindet das Verbindungsstück 25 den Artikelhalter 11 so mit der Steckmuffe 7, dass die Halteachse 12 des Artikelhalters 11 und die Muffenachse 9 der Steckmuffe 7 koaxial zueinander angeordnet sind. Alternativ dazu kann jedoch vorgesehen sein, dass die Halteachse 12 und die Muffenachse 9 achsenparallel zueinander angeordnet sind. Dies ist dann bevorzugt, wenn das Transportwerkzeug 1 mehr als einen Artikelhalter 11 aufweist - z.B., wie in Figur 5 dargestellt, zwei parallel zueinender angeordnete Artikelhalter 11. Die Ausführungsform eines Transportwerkzeugs 1 mit zwei Artikelhaltern 11 ist insbesondere dann bevorzugt, wenn z.B. die durch das Transportwerkzeug 1 anhebbare Last vergrössert oder der Reibschluss zwischen dem Artikelhalter 11 und den Öffnungen 5 eines bestimmten Laborartikels 2 reduziert werden soll.

In der Figur 1B ebenfalls gut zu sehen ist, dass in der besonders bevorzugten Ausführungsform des Transportwerkzeugs 1 ein Lüftungsloch 28 vorgesehen ist. Dieses soll einen Druckausgleich im Innenraum 8 der Steckmuffe 7 ermöglichen, wenn zum Aufstecken des Transportwerkzeugs 1 auf die Pipette 4, das Aufnahmeende 19 der Pipette 4 in den Innenraum 8 der Steckmuffe 7 eingeführt wird. In der besonders bevorzugten, in den Figuren 1A und 1B gezeigten Ausführungsform umfasst das Verbindungsstück 25 das zumindest eine Lüftungsloch 28. So entsteht ein kontinuierlicher Innenraum, der sich von der Aufnahmeöffnung 10 aus durchgehend bis hin zum Ende des Artikelhalters 11 bzw. seines Haltemittels 13 erstreckt.

Alternativ kann vorgesehen sein, dass nicht das Verbindungsstück 25 das Lüftungsloch 28 (oder eine Mehrzahl derselben) bereitstellt, sondern z.B. eine Seitenwand 31 der Steckmuffe 7, wobei jedes Lüftungsloch 28 diese Seitenwand 31 zum Ermöglichen eines Druckausgleichs vollständig durchdringt (siehe hierzu auch Figur 4, Position A sowie die Fig. 7B, 8A und 8B). Anstelle eines Lüftungslochs 28 (oder zusätzlich) kann auch ein die Wand vollständig durchdringender Schlitz 40 vorgesehen sein, der sich in Richtung der Muffenachse 9 erstreckt und nicht nur der Entlüftung dient, sondern auch das Einführen des Aufnahmeendes 19 der Pipette 4 in den Innenraum 8 der Steckmuffe 7 erleichtert, wenn z.B. die lösbare Steckverbindung formschlüssig sein soll (siehe auch Figur 4, Position C).

In der Figur 2 sind ein erfindungsgemässes Transportwerkzeug 1, eine aus dem Stand der Technik an sich bekannte Pipette 4 mit ihrem Aufnahmeende 19, und eine an sich aus dem Stand der Technik ebenfalls bekannte Einwegpipettenspitze 6 jeweils in einer Querschnittszeichnung nebeneinander gestellt. Dabei sollen die relevanten Relationen zwischen einem erfindungsgemässen Transportwerkzeug 1, einem ausgewählten Aufnahmeende 19 einer Pipette 4 und einer Einwegpipettenspitze 6 dargestellt werden, damit das Transportwerkzeug 1 anstelle einer bekannten Einwegpipettenspitze 6 auf eine Pipette 4 aufsteckbar (und davon abwerfbar) ist.

Prinzipiell ist bevorzugt, dass die Aussendimensionen des Aufnahmeendes 19 der Pipette 4 die Dimensionen des Innenraums 8 der Steckmuffe 7 bestimmen, dass also das Pipettiergerät die Ausbildung des Transportwerkzeugs 1 vorgibt. Dies ist ein an sich aus dem Stand der Technik bekanntes Vorgehen für Hersteller von Wegwerfpipettenspitzen 6: Pipettiergeräte von verschiedenen Herstellern können auch verschieden geformte und unterschiedlich dimensionierte Aufnahmeenden 19 der verwendeten Pipetten 4 aufweisen, so dass für die verschiedenen Pipetten 4 entsprechend Einwegpipettenspitzen 6 mit unterschiedlichen Innendimensionen benötigt werden, damit eine Pipettenspitze eine dichtende und doch lösbare Steckverbindung mit der entsprechenden Pipette 4 des Geräts eingehen kann. Dieser Ansatz hat sich bewährt, weil damit das technisch kompliziertere Bauteil "Pipette" nicht für verschiedene Pipettenspitzen ausgewechselt werden muss. Stattdessen kann der deutlich kostengünstigere Massenartikel (die Wegwerfpipettenspitze 6 oder das Transportwerkzeug 1) bei dessen Herstellung an die Pipette 4 angepasst werden.

In der Mitte der Figur 2 ist eine Pipette 4 mit einem konusförmigen Aufnahmeende 19 gezeigt. Hier ist also das Aufnahmeende 19 zum unteren Ende der Pipette 4 hin konisch zulaufend ausgebildet. Die Verwendung eines Aufnahmekonus ist insbesondere dann bevorzugt, wenn z.B. eine kraftschlüssige, lösbare Steckverbindung zwischen der Pipette 4 und einer Einwegpipettenspitze 6 oder einem Transportwerkzeug 1 ausgebildet werden soll.

Die Konizität des in der Figur 2 dargestellten Aufnahmeendes 19 wird in diesem Fall dadurch erzielt, dass es zwei umlaufende, zueinander und zu dem Ende der Pipette 4 beabstandete, ringförmige Erhebungen 14,14' aufweist. Dabei ist der grösste Aussendurchmesser k der oberen Erhebung 14 grösser als der grösste Aussendurchmesser i der unteren, dem Ende der Pipette 4 näher liegenden Erhebung 14'. Das Aufnahmeende 19 ist also im Bereich der oberen ringförmigen Erhebung 14 breiter als im Bereich der unteren, ringförmigen Erhebung 14'. Damit bestimmen deren Aussenflächen sowie ihr Abstand L_{14-14'} zueinander den Grad der Konizität. Diese ringförmigen, umlaufenden Erhebungen 14,14' sind dabei in so einem Abstand zum Ende der Pipette 4 positioniert, dass beide mit ihren grössten Aussendurchmessern i,k noch in die Einwegpipettenspitze 6 bzw. in das Transportwerkzeug 1 eintauchen. Beim Erreichen einer definierten Eintauchtiefe h,h' kontaktieren die umlaufenden Erhebungen 14,14' die Innenwand der Einwegpipettenspitze 6 bzw. des Innenraums 8 der Steckmuffe 7 des Transportwerkzeugs 1 und gehen dort den Reibschluss mit der Einwegpipettenspitze 6 oder dem Transportwerkzeug 1 ein.

Alternativ kann die Konizität des Aufnahmeendes 19 auch dadurch erzielt werden, dass nur eine einzige zum Ende der Pipette 4 hin beabstandete, ringförmige Erhebung 14 vorgesehen ist, so dass der grösste Aussendurchmesser k dieser ringförmigen Erhebung grösser ist als jeder Aussendurchmesser q des Aufnahmeendes 19 in Richtung des Endes der Pipette 4 (siehe Figur 4, Position A).

Die Eintauchtiefe h für eine bestimmte Kombination von Pipette 4 und Einwegpipettenspitze 6 sowie die Eintauchtiefe h' für eine entsprechende Kombination von Pipette 4 und Transportwerkzeug 1 ist jeweils vorbestimmt. Ist die jeweilige Eintauchtiefe h,h' erreicht, so sitzt die Pipettenspitze 6 bzw. das Transportwerkzeug 1 lösbar aufgesteckt auf dem Aufnahmeende 19 der Pipette 4. Das Einführen des Aufnahmeendes 19 einer Pipette 4 in den Innenraum 27 der Pipettenspitze 6 bzw. in den Innenraum 8 des Transportwerkzeugs 1 kann bei den gängigen Pipettierautomaten automatisiert erfolgen. Dazu wird zuvor die aufzuwendende Kraft ermittelt, die benötigt wird um die Pipette 4 mit ihrem Aufnahmeende 19 in die Einwegpipettenspitze 6 bzw. in das Transportwerkzeug 1 einzuschieben bis die gewünschte Steckverbindung gebildet ist.

Beispielhaft kann ein solches konisch zulaufende Aufnahmeende 19 einer Pipette 4 die folgenden Ausmasse aufweisen, die entsprechend in der Figur 2 gekennzeichnet sind:
- h,h':: 11.1 mm (= Eintauchtiefe in eine angepasste Einwegpipettenspitze 6 / in ein angepasstes Transportwerkzeug 1);
- i:: 5.13 mm (+ 0,01 mm / - 0,03 mm; = grösster Aussendurchmesser der unteren, ringförmigen Erhebung 14');
- k:: 5.45 mm (+ 0,01 mm / - 0,03 mm; = grösster Aussendurchmesser der oberen, ringförmigen Erhebung 14);
- L_{14-14'}:: 6.5 mm (+/- 0,02 mm; = Länge des Abstands zwischen i und k);
- L₃₅:: 14 mm (= Gesamtlänge des Aufnahmeendes 19 zwischen dem Ende der Pipette 4 und einem oberen Rand 39);
- q:: 4.7 mm (= Aussendurchmesser der Pipette im Bereich des Aufnahmeendes 19).

Ebenfalls aus dem Stand der Technik bekannt sind Aufnahmeenden 19 einer Pipette 4 eines Pipettiersystems 3, die nicht konisch sondern im Wesentlichen zylindrisch ausgebildet ist. In diesem Fall ist auch der Innenraum 8 der Steckmuffe 7 des erfindungsgemässen Transportwerkzeugs 1 komplementär, also zylindrisch ausgebildet. Um die Bildung einer lösbaren Steckverbindung zu ermöglichen, müssen hier jedoch auf dem Aufnahmeende 19 der Pipette 4 zusätzlichen Strukturen vorhanden sein; entsprechend müssen auch komplementäre Strukturen in dem Innenraum 8 der Steckmuffe 7 bereitgestellt werden (siehe Figur 4, Position C).

Wird eine Pipette 4 mit Aufnahmeende 19 bzw. Aufnahmekonus 19 verwendet, so sind - zum Ausbilden der kraftschlüssigen, lösbaren Steckverbindung - sowohl der Innenraum 27 der Einwegpipettenspitze 6 und auch der Innenraum 8 der Steckmuffe 7 des erfindungsgemässen Transportwerkzeugs 1 an den Aufnahmekonus 19 angepasst, also ebenfalls konisch zulaufend ausgebildet. Jeweils ein solches, angepasstes Transportwerkzeug 1 und eine solche Einwegpipettenspitze 6 sind exemplarisch in der Figur 2 auf der linken Seite (das Transportwerkzeug 1) und auf der rechten Seite (die Einwegpipettenspitze 6) der Pipette 4 dargestellt.

Die auf der rechten Seite der Figur 2 dargestellte Einwegpipettenspitze 6 ist so mit ihrem Innenraum 27 an den gezeigten Aufnahmekonus 19 angepasst, dass sie auf diesen automatisiert reibschlüssig und lösbar aufgesteckt werden kann. Eine solche Einwegpipettenspitze 6 umfasst typischerweise Verstärkungsstreben 26, wie sie oben bereits beschrieben wurden - sie dienen zum Einen der Verstärkung des oberen Kragenbereichs der Einwegpipettenspitze 6, um ein Verformen beim Einfahren des Aufnahmeendes bzw. Aufnahmekonus 19 der Pipette 4 gering zu halten oder gar zu verhindern. Zudem dienen diese Verstärkungsstreben 26 dem lockeren Halten der Einwegpipettenspitze 6 in einer Lageröffnung 5' eines Pipettenspitzenträgers 2'. Dabei steht die Pipettenspitze 6 mit der Unterseite dieser Verstärkungsstreben 26 auf der Oberseite 23 des Pipettenspitzenträgers 2' auf, ohne dass sie mit ihren Seitenwänden die Innenwand der Lageröffnung 5' kontaktiert. So kann die Einwegpipettenspitze 6 einfach und ohne Widerstand von einer Pipette 4 aufgenommen und aus der Lageröffnung 5' bewegt werden.

Die Einwegpipettenspitze 6 weist damit im Bereich der Verstärkungsstreben 26 einen grössten, ersten Aussendurchmesser p auf, der grösser ist als ein oberster Durchmesser f' (siehe Figur 3, Position E) der Lageröffnung 5' des Pipettenspitzenträgers 2'. Zudem weist die Einwegpipettenspitze 6 in dem grössten Aussenbereich ohne Verstärkungsstreben 26 einen zweiten Aussendurchmesser o auf, der kleiner ist als der oberste Durchmesser f' der Lageröffnung 5' des Pipettenspitzenträgers 2'. Durch das gegenseitige Abstimmen dieser Aussendurchmesser o,p wird die Lagerung der Einwegpipettenspitze 6 in dem Pipettenspitzenträger 2' ermöglicht.

Der Innenraum 27 der Pipettenspitze 6 der Figur 2 ist in Richtung ihrer Pipettenspitzenöffnung konisch zulaufend, indem ihr erster, in der Zeichnung oberer Innendurchmesser m grösser ist als ihr zweiter, unterer Innendurchmesser n. Dabei ist die Konizität so an die Konizität des Aussenbereichs des Aufnahmeendes 19 der Pipette 4 angepasst, dass eine lösbare, reibschlüssige und dichtende Steckverbindung aufgebaut werden kann, wenn das Aufnahmeende 19 bis zur definierten Eintauchtiefe h in die Einwegpipettenspitze 6 eingesteckt wurde. Die Feinabstimmungen hierzu liegen im Wissen des Fachmanns und werden daher an dieser Stelle nicht weiter erörtert.

Eine beispielhafte, an das in der Figur 2 dargestellte Aufnahmeende 19 der Pipette 4 angepasste Einwegpipettenspitze 6 kann die folgenden Ausmasse aufweisen, die ebenfalls entsprechend in der Figur 2 gekennzeichnet sind:
- L6:: 58.3 mm (+/- 0,2 mm; = Gesamtlänge der Einwegpipettenspitze 6);
- m:: 5.39 mm (+/- 0,03 mm; = erster, grösserer Innendurchmesser der Einwegpipettenspitze 6);
- n:: 5.06 mm (+/- 0,03 mm; = zweiter, kleinerer Innendurchmesser der Einwegpipettenspitze 6);
- o:: 6.5 mm (+/- 0,05 mm; = erster, grösster Aussendurchmesser der Einwegpipettenspitze 6 ohne Verstärkungsstreben 26);
- p:: 7.9 mm (+/- 0,05 mm; = zweiter, grösster Aussendurchmesser mit Verstärkungsstreben 26).

Ein erfindungsgemässes, an die Aussenmasse des in der Mitte der Figur 2 dargestellten Aufnahmeendes 19 einer Pipette 4 angepasstes Transportwerkzeug 1 ist auf der linken Seite dieser Pipette 4 dargestellt. Der charakteristische Aufbau wurde bereits ausführlich zu der Figur 1 beschrieben und soll daher an dieser Stelle nicht wiederholt werden. Ein solches, angepasstes Transportwerkzeug 1 mit konisch zulaufendem Innenraum 8 zum lösbaren, reibschlüssigen Aufstecken auf ein konisch zulaufendes Aufnahmeende 19 gemäss den Ausmassen der Figur 2 kann selbst die folgenden Ausmasse aufweisen, die ebenfalls entsprechend in der Figur 2 gekennzeichnet sind:
- a:: 7.18 mm (+/- 0,03 mm; = grösster Aussendurchmesser des kugelförmigen, geschlitzten Haltemittels 13);
- b:: 7.15 mm (= kleinster Aussendurchmesser vom Verbindungsstück 25);
- c:: 5.47 mm (+/- 0,03 mm; = erster, grösserer Innendurchmesser des Innenraums 8 der Steckmuffe 7);
- d:: 4.97 mm (+/- 0,03 mm; = zweiter, kleinerer Innendurchmesser der konusförmigen Innenwand der Steckmuffe 7);
- L₇:: 15.5 mm (= Länge der Steckmuffe 7);
- L₁₁:: 8.5 mm (= Länge des Artikelhalters 11);
- L₁₃:: 5.25 mm (= Länge des kugelförmigen Haltemittels 13);
- L₂₅:: 1 mm (= Länge des Verbindungsstücks 25).

Die hier angegebenen Masse sind beispielhafte Masse für eine aufeinander abgestimmte Kombination von erfindungsgemässen Transportwerkzeug 1 und Aufnahmeende 19 einer Pipette 4 und für eine ebenfalls aufeinander abgestimmte Kombination von Einwegpipettenspitze 6 und dem gleichen Aufnahmeende 19 einer Pipette 4. Es liegt im Bereich des Wissens des Fachmanns nach Studium dieser Anmeldung, je nach gewünschter Verbindung das erfindungsgemässe Transportwerkzeug 1 an die entsprechende Form und Dimension des Aufnahmeendes 19 einer Pipette 4 anzupassen.

Für die hier spezifizierten Kombinationen aus erfindungsgemässen Transportwerkzeug 1 und Aufnahmeende 19 einer Pipette 4 und Einwegpipettenspitze 6 und Aufnahmeende 19 einer Pipette 4 können die folgenden Geräteparameter verwendet werden: Zum Aufnehmen dieser Einwegpipettenspitze 6 sowie zum Aufnehmen dieses Transportwerkzeugs 1 auf die Pipette 4 wird eine Kraft von typischerweise 24 N benötigt, wenn sie z.B. in dem Pipettiersystem 3 "Freedom EVO" des aktuellen Anmelders verwendet wird. Analog dazu wird zum Abwerfen dieser aufgesteckten Einwegpipettenspitze 6 sowie zum Abwerfen dieses aufgesteckten Transportwerkzeugs 1 mit dem Abwerfmechanismus 30 des gleichen Pipettiersystems 3 - eine Kraft von circa 5 N benötigt.

Figur 3 zeigt einen vertikalen Querschnitt durch einen an sich aus dem Stand der Technik bekannten Pipettenspitzenträger 2'. In den Lageröffnungen 5' der Positionen A und B ist jeweils eine Einwegpipettenspitze 6 widerstandsfrei gelagert, indem sie mit der Unterseite ihrer Verstärkungsstreben 26 auf der Oberseite 23 des Pipettenspitzenträgers 2' steht. Über der Lageröffnung 5' der Position F ist ein Transportwerkzeug 1 gezeigt, welches bereits auf eine Pipette 4 aufgesteckt ist, und welches demnächst mit seinem Artikelhalter 11 in diese Lageröffnung 5' eingesteckt werden soll. In der Lageröffnung 5' der Position H ist ein in diese eingestecktes Transportwerkzeug 1 mit Pipette 4 gezeigt.

Für die Lageröffnungen 5' an den Positionen A-C und E-H ist jeweils eine waagerechte Trennlinie angedeutet. Diese Trennlinie kennzeichnet eine Trennlinie zwischen zwei Spritzgusswerkzeughälften, welche für die Herstellung des hier gezeigten Pipettenspitzenträgers 2' verwendet wurden. Um eine gute Entformbarkeit zu gewährleisten, verläuft die entsprechende Lageröffnung 5' jeweils leicht konisch in Richtung der Oberseite 23 und der Unterseite 24 des Pipettenspitzenträgers 2' auseinander. Damit weist die Lageröffnung 5' auf Höhe der Trennlinie einen kleinsten Innendurchmesser e auf. Die Transportwerkzeuge 1 sowie die Einwegpipettenspitzen 6, die in dieser Figur 3 gezeigt sind, entsprechen denen, die jeweils in der Figur 2 gezeigt und entsprechend spezifiziert wurden. Sie sind an die Masse der Lageröffnungen 5' dieses Pipettenspitzenträgers 2' angepasst.

Beispielhaft sind für eine entsprechend abgestimmte Lageröffnung 5' eines Pipettenspitzenträgers 2' genannt:
- a:: 7.18 mm (+/- 0.05 mm; = grösster Aussendurchmesser des Haltemittels 13 des Transportwerkzeugs 1);
- e:: 7.0 mm (= engster Innendurchmesser im Bereich der Trennlinie);
- f:: 7.25 mm (= äusserer Innendurchmesser an der Unterseite 24 der Lageröffnung 5');
- f':: 7.1 mm (= äusserer Innendurchmesser an der Oberseite 23 der Lageröffnung 5').

In der Position D ist dagegen eine Lageröffnung 5' gezeigt, welche durchgehend konisch von der Oberseite 23 des Pipettenspitzenträgers 2' in Richtung von dessen Unterseite 24 auseinanderläuft. Damit ist hier der äussere, obere Innendurchmesser f' gleich dem engsten Durchmesser e dieser Lageröffnung 5'. Bekannt sind ebenfalls Lageröffnungen 5', welche zylindrisch ausgebildet sind (vgl. auch Figur 4, Position E).

In die Einwegpipettenspitze 6 in der Lageröffnung 5' der Position A ist bereits eine Pipette 4 mit ihrem Aufnahmeende 19 reibschlüssig eingeführt, so dass die Pipette 4 bei einer entsprechenden Aufwärtsbewegung die Einwegpipettenspitze 6 mitführen würde. Wie bereits oben erwähnt, ist für diese Kombination ein Reibschluss bei einer bevorzugten Eintauchtiefe h der Pipette 4 von 11,1 mm in den Innenraum 27 der Einwegpipettenspitze 6 gewährleistet. Dabei ist es bevorzugt, dass, wenn die Pipette 4 reibschlüssig in die Einwegpipettenspitze 6 eingesteckt ist, die Längsachse 16 der Pipette 4 und die Längsachse 15 der Einwegpipettenspitze 6 koaxial angeordnet sind.

Für die in der Position B gelagerte Einwegpipettenspitze 6 ist gezeigt, wie gerade eine geeignete Pipette 4 in Richtung der Aufnahmeöffnung 17 der Pipettenspitze 6 heruntergefahren wird, um diese aufzunehmen. Die relevanten Durchmesser an dem Aufnahmeende 19 der Pipette 4 und im Innenraum 27 der Einwegpipettenspitze 6 sind hervorgehoben (Durchmesser i und k der Pipette 4 und Durchmesser m und n des Innenraums 27 der Einwegpipettenspitze 6). Auch in diesem Fall wird also die Pipette reibschlüssig in die Einwegpipettenspitze 6 gesteckt.

Ist eine Einwegpipettenspitze 6 reib- oder formschlüssig auf das Aufnahmeende 19 der Pipette 4 aufgesteckt, kann die Pipette 4 mit aufgesteckter Einwegpipettenspitze 6 automatisiert zu einer definierten Position auf dem Arbeitsfeld des Pipettiersystems 3 gefahren werden, so dass dort die gewünschte Aktion, z.B. ein Aspirier- oder Dispensiervorgang, durchgeführt werden kann.

Über der freien Lageröffnung 5' der Position F ist ein erfindungsgemässes Transportwerkzeug 1 gezeigt, welches bereits auf eine Pipette 4 bzw. ihr Aufnahmeende 19 aufgesteckt ist. Demnach wurde zuvor bereits ein in einem Werkzeugträger 37 gelagertes Transportwerkzeug 1 durch Absenken der Pipette 4 und Einführen des Aufnahmekonus 19 in die Steckmuffe 7 um eine Eintauchtiefe h' von der Pipette 4 aufgenommen. Das Transportwerkzeug 1 ist in der in den Figuren 1 und 2 gezeigten, besonders bevorzugten Ausführungsform mit einem konisch, in Richtung des Verbindungsstücks 25 zulaufenden Steckmuffen-Innenraum 8 und einem Artikelhalter 11 mit dem im wesentlichen kugelförmigen, geschlitzten Haltemittel 13 gezeigt. Ebenso ist die Pipette 4 für diese Position (sowie für die Positionen A, B und H) mit dem zulaufenden Aufnahmeende 19, realisiert durch zwei verschieden starke umlaufende, ringförmige Erhebungen 14,14' dargestellt. Das gezeigte Transportwerkzeug 1 ist damit lösbar und reibschlüssig auf die Pipette 4 aufgesteckt, wenn die Pipette 4 um eine bevorzugte Eintauchtiefe h' in den Innenraum 8 der Steckmuffe 7 eingeführt ist, wobei die Muffenachse 9 der Steckmuffe 7, die Halteachse 12 des Artikelhalters 11 und die Längsachse 16 der Pipette 4 koaxial zueinander angeordnet sind.

Die Eintauchtiefen h und h' sind dabei im wesentlichen durch die Dimensionen des Aufnahmeendes 19 der Pipette und des Innenraums 27 der Pipettenspitze 6 bestimmt, und bevorzugt taucht die gleiche Pipette 4 zum Bilden der lösbaren Steckverbindung jeweils um die gleiche Eintauchtiefe h und h' sowohl in die entsprechende Einwegpipettenspitze 6 als auch in die Steckmuffe 7 des Transportwerkzeugs 1 ein. Das Transportwerkzeug 1 in dieser besonders bevorzugten Form ist dabei besonders geeignet, um mit einer Lageröffnung 5', welche, wie oben beschrieben, von der Trennlinie aus leicht konisch in Richtung der Oberseite 23 und der Unterseite 24 des Pipettenspitzenträgers 2' auseinanderläuft, eine Steckverbindung einzugehen, so dass dieser Pipettenspitzenträger 2' durch das so gekoppelte Transportwerkzeug 1 mit der Pipette 4 angehoben und auf dem Arbeitsfeld des Pipettiersystems 3 umpositioniert oder entsorgt werden kann. Dies wird in der Position H des Pipettenspitzenträgers 2' verdeutlicht.

Die Pipette 4 wurde hier mit dem aufgesteckten Transportwerkzeug 1 in Richtung der freien Lageröffnung 5 in der Position H abgesenkt. Durch das Absenken wird das kugelförmige, geschlitzte Haltemittel 13 in diese Lageröffnung 5' geführt, wobei das kugelförmige Haltemittel 13 durch die durch den Schlitz 22 vermittelte Federfunktion zusammengedrückt wird, so dass es die Innenwände der Lageröffnung 5 federnd beaufschlägt, sobald es mit ihrem grössten Aussendurchmesser a in Bereiche der Lageröffnungen 5' mit gleich grossem oder kleineren Innendurchmesser geschoben wird. Das kugelförmige Haltemittel 13 wird zunächst immer stärker zusammengedrückt, bis es den engsten Innendurchmesser e an der Trennlinie passiert. Da weiter in Richtung Unterseite 2 der Innendurchmesser der Lageröffnung 5' wieder grösser wird, wird das kugelförmige Haltemittel 13 dann zunächst wieder weniger stark zusammengedrückt, wenn es weiter in die Lageröffnung 5' geschoben wird. Tatsächlich wird mittels der Pipette 4 das Transportwerkzeug 1 mit seinem kugelförmigen Haltemittel 13 über den engsten Innendurchmesser e hinaus in die Lageröffnung 5' eingeschoben, so dass das kugelförmige Haltemittel 13 zunächst nicht in einer Höhe mit seiner grössten Klemmwirkung in der Lageröffnung 5' positioniert ist.

Für ein Transportwerkzeug 1 mit den Dimensionen, wie sie in der Figur 2 beispielhaft spezifiziert sind (also mit einem grössten Aussendurchmesser des kugelförmigen Haltemittels 13 von a = 7.18 mm) ist dabei eine Einstecktiefe g von ca. 8 mm bevorzugt, wenn der engste Innendurchmesser e = 7.0 mm ist und um eine Länge Lₑ = 4.0 mm von der Oberseite 23 des Pipettenspitzenträgers 2' beabstandet ist.

Durch eine anschliessende Aufwärtsbewegung der Pipette 4 wird auch das Transportwerkzeug 1 angehoben und es wird zunächst wieder in der Lageröffnung 5' nach oben gezogen bis es eine Position innerhalb der Lageröffnung 5' erreicht, in welcher die Reibkraft zwischen kugelförmigem Haltemittel 13 und Innenwand der Lageröffnung 5' und die Gewichtskraft des Pipettenspitzenträgers 2' gleich gross sind. Befindet sich das kugelförmige Haltemittel 13 in dieser Position, so hebt es bei einer weiteren Aufwärtsbewegung der Pipette 4 ebenfalls den Pipettenspitzenträger 2' an, und durch die entsprechenden weiteren Bewegungen der Pipette 4 kann auch der Pipettenspitzenträger 2' oberhalb des Arbeitsfeldes des Pipettiersystems 3 bewegt und z.B. umpositioniert werden.

Der Figur 3 an der Position H ist zudem zu entnehmen, dass in dieser Kombination das Erreichen der bevorzugten Einstecktiefe g des Transportwerkzeugs 1 in der Lageröffnung 5' nicht durch die Aussenkanten des Verbindungsstücks 25 (mit dem Aussendurchmesser b, vgl. Fig. 2) beschränkt ist. Es kann jedoch möglich sein, diese Aussenkanten so auszubilden, dass ihr Aussendurchmesser b grösser ist als der obere, äussere Innendurchmesser f' der Lageröffnung 5', um z.B. eine maximale Eintauchtiefe für das Transportwerkzeug 1 in die Lageröffnung 5' zu bestimmen.

Die Figur 4 zeigt einen vertikalen Querschnitt durch einen Pipettenspitzenträger 2' mit drei eingesteckten Transportwerkzeugen 1, welche Lageröffnungen 5' in den Positionen A, C und E des Pipettenspitzenträgers 2' besetzten. Jedes Transportwerkzeug 1 weist dabei jeweils verschiedene Ausführungsformen seiner wesentlichen Elemente Steckmuffe 7, Verbindungsstück 25 und Artikelhalter 11 auf. Hier wird beispielhaft verdeutlicht, wie die verschiedenen Ausführungsformen von Steckmuffe 7, Verbindungsstück 25 und Artikelhalter 11 miteinander zu einem individuell auf eine bestimmte Pipette 4 und einen bestimmten Pipettenspitzenträger 2' abgestimmten Transportwerkzeug 1 kombiniert werden können.

In der Position A von Fig. 4 ist ein eingestecktes Transportwerkzeug 1 gezeigt, bei welchem der Innenraum 8 der Steckmuffe 7 zum Verbindungsstück 25 hin konisch zulaufend ausgebildet ist. Dieses Transportwerkzeug 1 ist damit besonders geeignet, um reibschlüssig auf ein Aufnahmeende 19 einer Pipette 4, welches konisch zu ihrem Aufnahmeende 19 hin zulaufend ausgebildet ist, aufgesteckt zu werden. Die Konizität des Aufnahmeendes 19 der Pipette 4 wird in diesem Fall mittels des Aussendurchmessers nur einer umlaufender, ringförmiger Erhebung 14 und des Aussendurchmessers der Pipette 4 am Ende ihres Aufnahmeendes 19 bestimmt. Die Steckmuffe 7 dieses Transportwerkzeugs 1 umfasst Verstärkungsstreben 20 (nicht gezeigt ist hier der Kragen 29, vgl. Fig. 1A). Hier umfasst die Steckmuffe 7 selbst zumindest ein Lüftungsloch 28 zum Ermöglichen eines Druckausgleichs im Innenraum 8 der Steckmuffe 7. Das Lüftungsloch 28 durchdringt eine Seitenwand 31 der Steckmuffe 7. Ebenso kann die Steckmuffe 7 eine Mehrzahl von Lüftungslöchern 28 umfassen, welche die Seitenwand 31 der Steckmuffe 7 durchdringen. In diesem Transportwerkzeug 1 weist das Verbindungsstück 25 kein Lüftungsloch 28 auf, obwohl auf dieses nicht verzichtet werden müsste.

Der Artikelhalter 11 des in der Position A des Pipettenspitzenträgers 2' gezeigten Transportwerkzeugs 1 ist als ein länglicher Hohlkörper ausgebildet. Dieser umfasst eine Mehrzahl von Haltemitteln 13, welche als Vorsprünge 33 ausgebildet sind und welche auf der Aussenseite 32 des Artikelhalters 11 angeordnet sind. Dabei sind diese als Vorsprünge 33 ausgebildeten Haltemittel 13 zum Bilden einer reibschlüssigen Steckverbindung mit der Lageröffnung 5' des Pipettenspitzenträgers 2' ausgebildet. Für eine verbesserte Klemmwirkung kann der Artikelhalter 11 zusätzlich geschlitzt ausgebildet sein (nicht gezeigt).

Das in der Position C von Fig. 4 gezeigte, eingesteckte Transportwerkzeug 1 umfasst eine Steckmuffe 7, mit welcher das Transportwerkzeug 1 formschlüssig auf ein Aufnahmeende 19 einer Pipette 4 aufsteckbar ist. Dazu umfasst der Innenraum 8 der Steckmuffe 7 bevorzugt zumindest eine umlaufende Vertiefung 21. Diese umlaufenden Vertiefungen 21 sind zu gegenüber dem Ende der Pipette 4 beabstandeten, ringförmigen Erhebung 14 der Pipette 4 komplementär ausgebildet. Besonders bevorzugt und gezeigt ist jedoch ein Innenraum 8 der Steckmuffe 7 mit zwei umlaufende Vertiefungen 21, die zu zwei auf dem Aufnahmeende 19 der Pipette 4 angeordneten und voneinander beabstandeten ringförmigen Erhebungen 14,14' der Pipette 4 komplementär ausgebildet sind. Ein solches formschlüssig über zwei umlaufende Vertiefungen des Innenraums 8 der Steckmuffe 7 eingestecktes Aufnahmeende 19 einer Pipette 4 mit entsprechend komplementären, zwei umlaufenden, ringförmigen Erhebungen ist durch eine gepunktete Linie angedeutet.

Wird die lösbare Steckverbindung zwischen der Steckmuffe 7 des Transportwerkzeugs 1 und der Pipette 4 eines Pipettiersystems 3 durch einen Formschluss gebildet, kann der Innenraum 8 der Steckmuffe 7 zylindrisch ausgebildet sein - sofern dies durch die Form des Aufnahmeendes 19 der Pipette 4 vorgegeben ist. In diesem Fall würde der erste Innendurchmesser c des Innenraums 8 dem zweiten Durchmesser des Innenraums 8 entsprechen. Diese Situation ist ebenfalls für das Transportwerkzeug 1 in der Position C der Figur 4 gezeigt. Um das Einführen der Pipette 4 durch die Aufnahmeöffnung 10 der Steckmuffe 7 in ihren Innenraum 8 zu erleichtern, kann vorgesehen sein, dass die Steckmuffe 7 einen Schlitz 40 umfasst, der sich, ausgehend von der Aufnahmeöffnung 10 in Richtung des Verbindungsstücks 25 erstreckt, dieses aber nicht erreicht. Die Länge und Breite dieses Schlitzes 40 ist dabei bevorzugt so gewählt, dass zum Einen die Pipette 4 einfach in den Innenraum 8 der Steckmuffe 7 eingeführt werden kann, dass aber die Steckmuffe 7 dabei nicht soweit auseinandergedrückt wird, dass die Pipette 4 nicht mehr das Transportwerkzeug 1 hält, wenn sie z.B. wieder nach oben bewegt wird. Die formschlüssige Steckverbindung muss weiterhin gebildet werden können. Zum Anderen kann dieser Schlitz 40 so ausgebildet sein, dass er als Ersatz für ein oder mehr Lüftungslöcher 28 dient, dass er also selbst einen Druckausgleich im Innenraum 8 der Steckmuffe 7 ermöglicht, wenn die Pipette 4 mit ihrem Aufnahmeende 19 in die Steckmuffe 7 eingesteckt wird.

Das in der Position C gezeigte Transportwerkzeug 1 umfasst zudem an seiner Steckmuffe 7 Verstärkungsstreben 20, welche sich im Wesentlichen über die gesamte Länge L7 erstrecken (vgl. Figur 2). Derart lange Verstärkungsstreben 20 dienen der zusätzlichen Stabilisierung der Steckmuffe 7, wenn sie den langen Schlitz 40 zum Erleichtern des Einführens der Pipette 4 umfasst. Die Wahl der Länge, Breite und Anzahl solcher Verstärkungsstreben liegt im Wissen des Fachmanns.

Das zumindest eine Haltemittel 13 des Artikelhalter 11 des in der Position C gezeigten Transportwerkzeugs 1 ist wie zuvor in den Figuren 1 bis 3 beschrieben im wesentlichen kugelförmig und geschlitzt ausgebildet. In diesem Fall ist es in eine Lageröffnung 5' des Pipettenspitzenträgers 2' eingesteckt, welche ausgehend von der Oberseite 23 des Pipettenspitzenträgers 2' konisch in Richtung der Unterseite 24 des Pipettenspitzenträgers 2' auseinanderläuft.

Das in der Position E gezeigte, eingesteckte Transportwerkzeug 1 umfasst eine Steckmuffe 7, wie sie bereits für Transportwerkzeuge 1 in den Figuren 1 bis 3 gezeigt wurde; sie ist demnach für das Bilden einer reibschlüssigen, lösbaren Steckverbindung mit einem entsprechenden Aufnahmeende 19 einer Pipette 4 ausgebildet. Das Lüftungsloch 28 befindet sich in diesem Fall in dem Verbindungsstück 25.

Der Artikelhalter 11 dieses Transportwerkzeugs 1 in der Position E umfasst hier zumindest zwei Haltemittel 13, welche fingerförmig ausgebildet sind. Diese fingerförmigen Haltemittel 13 durchdringen dabei bei eingestecktem Artikelhalter 11 die Lageröffnung 5' vollständig, und zumindest einer dieser Finger ist ein fingerförmiger Schnapphaken mit einem Anschlag.

Die Steckverbindung zwischen dem Artikelhalter 11 und dem Pipettenspitzenträger 2' wird in diesem Fall zumindest mittels dieses fingerförmigen Schnapphakens gebildet, da dieser bei in die Lageröffnung 5' eingestecktem Artikelhalter 11 dessen Unterseite 24 beaufschlägt. Es wird somit eine Schnappverbindung zwischen dem fingerförmigen Haltemittel 13 und dem Pipettenspitzenträger 2' gebildet.

In jedem dieser drei verschiedenen Ausführungsformen ist jeweils die Muffenachse 9 der Steckmuffe 7, die Halteachse 12 des Artikelhalters 11 sowie die Längsachse der Pipette 4 koaxial zueinander angeordnet, wenn das Transportwerkzeug 1 mit seiner Steckmuffe 7 auf das entsprechende Aufnahmeende 19 der Pipette 4 aufgesteckt und mit seinem Artikelhalter 11 in eine Lageröffnung 5' eines Pipettenspitzenträgers 2' eingesteckt ist. Alternative Anordnungen sind in der folgenden Figur 5 gezeigt.

Die Figur 5 zeigt ein erfindungsgemässes Transportwerkzeug 1 gemäss weiteren, alternativen Ausführungsformen bezüglich der Ausbildung seines Artikelhalters 11. In beiden dieser gezeigten Ausführungsformen umfasst das Transportwerkzeug 1 jeweils zwei Artikelhalter 11, die mit ihren Halteachsen 12 in Bezug auf die Muffenachse 9 der Steckmuffe 7 unterschiedlich angeordnet sind. Das auf der linken Seite der Figur 5 gezeigte Transportwerkzeug 1 umfasst zwei Artikelhalter 11, welche durch das Verbindungsstück 25 so mit der Steckmuffe 7 verbunden sind, dass die Halteachse 12 des ersten Artikelhalters 11 (in dieser Darstellung der rechte Artikelhalter 11) koaxial zu der Muffenachse 9 und die Halteachse 12 des zweiten Artikelhalters 11 (in dieser Darstellung der linke Artikelhalter 11) achsenparallel zu der Muffenachse 9 angeordnet ist.

Das auf der rechten Seite der Figur 5 gezeigte Transportwerkzeug 1 umfasst ebenfalls zwei Artikelhalter 11. In diesem Fall sind jedoch die Artikelhalter 11 so durch das Verbindungsstück 25 mit der Steckmuffe 7 verbunden, dass ihre beiden Halteachsen 12 achsenparallel zu der Muffenachse 9 angeordnet sind.

Beispielhaft ist für diese Ausführungsform des Transportwerkzeugs 1 die Variante des Artikelhalters 11 mit der geschlitzten, im wesentlich kugelförmigen Ausführung des Haltemittels 13 gezeigt. Auch für diese Ausführungsform mit zwei Artikelhaltern 11 gilt jedoch, dass auch andere Varianten des Artikelhalters 11 und seines zumindest einen Haltemittels 13 verwendet werden können, so lange diese geeignet sind, mit freien Lageröffnungen 5' eines Pipettenspitzenträgers 2' eine Steckverbindung auszubilden.

Ebenso ist denkbar, dass ein Transportwerkzeug 1 nicht nur zwei sondern bei Bedarf sogar mehr Artikelhalter 11 umfasst. Bei der Verwendung von zwei oder mehr Artikelhalter 11 pro Transportwerkzeug 1 entspricht der Achsabstand zwischen den Halteachsen 12 bevorzugt dem Achsabstand direkt oder diagonal benachbarter Lageröffnungen 5' des aufzunehmenden Pipettenspitzenträgers 2'.

Die Verwendung von zwei oder mehr Artikelhaltern 11 pro Transportwerkzeug 1 ist insbesondere dann bevorzugt, wenn z.B. die anhebbare Last vergrössert werden soll, oder wenn bei gleicher zu tragender Last der die Haltekraft der einzelnen Artikelhalter 11 reduziert werden soll.

In einer besonders bevorzugten Ausführungsform ist das erfindungsgemässe Transportwerkzeug 1 einstückig und aus Kunststoff hergestellt. Um die Eigenschaften des Transportwerkzeugs möglichst nahe an die Eigenschaften einer gut aufzusteckenden Einwegpipettenspitze 6 für ein bestimmtes Aufnahmeende 19 einer Pipette 4 anzulehnen, wird bevorzugt der gleiche Kunststoff für die Herstellung des Transportwerkzeugs 1 verwendet wie für diese Einwegpipettenspitze 6. Beispielhaft sei an dieser Stelle Polypropylen genannt, welches gegebenenfalls mit Graphitpartikeln versetzt sein kann. Die Verwendung von Graphitpartikeln ist aus der Herstellung von Einwegpipettenspitzen 6 bekannt, um diese leitfähig zu machen.

In einer ganz besonders bevorzugten Ausführungsform wird das Transportwerkzeug 1 als ein Einwegartikel verwendet. Es ist dann also nicht vorgesehen, dass ein einmal in zumindest eine Lageröffnung 5' eines Pipettenspitzenträgers 2' eingesteckte Transportwerkzeug 1 wieder aus diesen Lageröffnungen 5' herausgelöst wird.

Die verschiedenen, zu den Figuren beschriebenen Ausführungsformen von Steckmuffe 7, Verbindungsstück 25 und Artikelhalter 11 mit Haltemittel 13 können je nach Bedarf miteinander zu einem individuellen Transportwerkzeug 1 kombiniert werden, um es sowohl an eine bestimmte Pipette 4 als auch an einen bestimmten Laborartikel 2, wie beispielsweise einen Pipettenspitzenträger 2' anzupassen.

Wenn das Transportwerkzeug 1 in seinen Dimensionen und Eigenschaften zum Aufstecken auf eine Pipette 4 eines Pipettiersystems 3 im Wesentlichen den Dimensionen und Eigenschaften von bekannten Einwegpipettenspitzen 6 angepasst ist besteht ein wesentlicher Vorteil darin, dass die Geräteeinstellungen zum Aufnehmen einer Einwegpipettenspitze 6 auch zum Aufnehmen eines Transportwerkzeugs 1 übernommen werden können. Zudem kann ein aufgestecktes Transportwerkzeug 1, z.B. wenn es bereits zum Umpositionieren eines leeren Pipettenspitzenträgers 2' verwendet wurde, auch mit dem gleichen Abwerfmechanismus und den gleichen Geräteeinstellungen von der Pipette 4 geschoben werden.

Die Figur 6A zeigt in einer Übersichtszeichnung ein mögliches Prinzip, wie ein Abwerfmechanismus 30 eines Pipettiersystems 3 für Einwegpipettenspitzen 6 auch zum Abwerfen eines auf die Pipette 4 aufgesteckten Transportwerkzeugs 1 verwendet werden kann. Auf der linken Seite der Figur 6A ist dabei in einer ersten Stufe die Situation dargestellt, in welcher ein Transportwerkzeug 1 auf eine Pipette 4 aufgesteckt ist, und zudem an seinem Artikelhalter 11 ein Pipettenspitzenträger 2' mit zumindest 5 freien Lageröffnungen 5' hängt. Der Abwerfmechanismus 30 des Pipettiersystems 3 umfasst einen Abwerfhebel 38 und ist in diesem Fall rechts neben der Pipette 4 angeordnet. Der Abwerfmechanismus 30 ist so um eine Achse schwenkbar (nicht gezeigt), dass er mit seinem Abwerfhebel 38 die Oberkante des Transportwerkzeugs 1 (in diesem Fall dessen Kragen 29) beaufschlagen kann, wenn er in eine entsprechende Abwerfposition gebracht wird. Die Schwenkrichtung, in welche der Abwerfhebel 38 bewegt werden muss, um tatsächlich die Oberkante des Transportwerkzeugs 1 zu beaufschlagen, damit das Werkzeug 1 von der Pipette 4 geschoben wird, ist mit einem gekrümmten Pfeil angedeutet. Der Abwerfmechanismus 30 ist auch wieder in seine Ausgangsposition rückschwenkbar; diese Schwenkrichtung ist jedoch nicht in der Figur 6 gezeigt. Zum Abwerfen wird also der Abwerfhebel 38 mit dem Abwerfmechanismus 30 in Richtung der Pipette 4 geschwenkt und in die Abwerfposition gebracht. Anschliessend wird die Pipette 4 nach oben bewegt. Diese Aufwärtsbewegung der Pipette 4 ist in der Situation auf der rechten Seite der Figur 6A durch einen geraden Pfeil angedeutet.

Die Schwenkbewegung des Abwerfmechanismus 30 und die Aufwärtsbewegung der Pipette 4 sind bevorzugt so aufeinander abgestimmt, dass auf der Abwerfhebel 38 den Kragen 29 des Transportwerkzeugs 1 beaufschlägt, wenn sich die Pipette 4 noch in der Aufwärtsbewegung befindet. Wird die Pipette 4 nach oben bewegt, und befindet sich der Abwerfhebel 38 des Abwerfmechanismus 30 bereits in der Abwerfposition, wird zunächst auch das aufgesteckte Transportwerkzeug 1 mit der Pipette nach oben bewegt, und zwar so lange, bis es mit seiner Oberkante gegen den Abwerfhebel 38 stösst. Wird die Pipette 4 weiter nach oben bewegt, wird das Transportwerkzeug 1 nicht mehr mitgeführt, da es von dem Abwerfhebel 38 in einer festen Höhenposition gehalten wird. Bei einer weiteren Aufwärtsbewegung der Pipette 4 wird diese damit auch in Relation zum Transportwerkzeug 1 bewegt, so dass das Aufnahmeende 19 der Pipette 4 durch die Aufnahmeöffnung 10 aus der Steckmuffe 7 des Transportwerkzeugs 1 herausgezogen wird. Dadurch wird die Steckverbindung gelöst und das Transportwerkzeug 1 fällt - mit gekoppeltem Pipettenspitzenträger 2' (bzw. hier mit gekoppelter Mikroplatte 2"') - von dem Aufnahmeende 19 der Pipette 4 ab und nach unten. Diese Situation ist in der Figur 6A auf der rechten Seite gezeigt.

Analog dazu ist in Figur 6B der gleiche Abwerfmechanismus 30 gezeigt wie in Figur 6A. Hier wird er, wie aus dem Stand der Technik bekannt, für eine auf eine Pipette 4 des Pipettiersystems 3 aufgesteckte Einwegpipettenspitze 6 verwendet. Der Abwerfmechanismus 30 ist noch nicht in Richtung der Pipette 4 geschwenkt sondern befindet sich noch in seiner Ruheposition. Zum Abwerfen der Einwegpipettenspitze 6 wird der Abwerfhebel 38 in seiner Abwerfposition geschwenkt, so dass, wenn die Pipette 4 nach oben bewegt wird, der Abwerfhebel 38 den oberen Rand der Einwegpipettenspitze 6 beaufschlägt und bei weiterem Aufwärtsbewegen der Pipette die Einwegpipettenspitze 6 von der Pipette 4 löst.

In den Figuren 6A und 6B sind jeweils die Situationen für eine Einwegpipettenspitze 6 und ein Transportwerkzeug 1, welche reibschlüssig auf das Aufnahmeende bzw. auf den Aufnahmekonus 19 der Pipette 4 gesteckt sind, gezeigt. Das Prinzip des Abwerfens ist jedoch auch auf formschlüssig aufgesteckte Einwegpipettenspitzen 6 und Transportwerkzeuge 1 übertragbar.

In einer alternativen, aus dem Stand der Technik ebenfalls bekannten Ausführungsform des Abwerfmechanismus 30 beaufschlägt der Abwerfhebel 38 nicht direkt eine Oberkante der Einwegpipettenspitze 6 bzw. des Transportwerkzeugs 1, sondern vielmehr eine Oberkante eines oberhalb der Pipette 4 und diese umschliessend angeordneten Adaptergehäuses (nicht gezeigt). Dieses Adaptergehäuse ist federnd gegenüber der Pipette 4 selbst bewegbar. Der Abwerfhebel 38 des Abwerfmechanismus ist in diesem Fall also höher in Relation zum Aufnahmeende 19 der Pipette 4 angeordnet. Wir der Abwerfhebel 38 in die Abwerfposition geschwenkt, und die Pipette 4 durch einen Roboterantrieb aufwärts bewegt, beaufschlägt der Abwerfhebel 38 die Oberkante des Adaptergehäuses und hält diese sowie eine darunter angeordnete Aussenhülse 41 in einer bestimmten Höhenposition. Wird dann die Pipette 4 weiter aufwärts bewegt, wird auch das ursprünglich aufgesteckte Transportwerkzeug 1 bzw. die ursprünglich aufgesteckte Einwegpipettenspitze 6 mittels des Adaptergehäuses und der Aussenhülse 41 zunächst in einer bestimmten Höhenposition gehalten, und zwar so lange, bis das Aufnahmeende 19 soweit aus dem Innenraum 8 der Steckmuffe 7 gezogen ist, dass die Steckverbindung gelöst ist und das Transportwerkzeug 1 bzw. die aufgesteckte Pipettenspitze 6 von dem Aufnahmeende 19 und damit von der Pipette 4 abfällt.

Die Figur 7 zeigt Vertikalschnitte durch zwei erfindungsgemässe Transportwerkzeuge 1 mit jeweils einem zum Eingehen einer Klebeverbindung ausgebildeten Artikelhalter 11.

Die Fig. 7A zeigt eine erste Variante mit einem ringförmigen Klebemittel 35', das an einer sich im Wesentlichen rechtwinklig zur Muffenachse 9 ausgerichteten, flachen Halteplatte 35 angebracht ist. Das Klebemittel 35' in der Form eines Druckklebers, der vorgängig sowohl auf die Halteplatte 35 als auch auf eine ebene Oberfläche 42 eines Mikroplattendeckels 2" aufgetragen wurde, stellt die Tragverbindung zwischen dem Mikroplattendeckel 2" und der Halteplatte 35 des Transportwerkzeugs 1 bereit. Das Transportwerkzeug 1 ist auf das Aufnahmeende 19 einer Pipette 4 aufgesteckt ist, wie dieses bereits im Zusammenhang mit den Figuren 1 bis 3 gezeigt und beschrieben worden ist, wobei die Pipette 4 um eine Eintauchtiefe h' in die Steckmuffe 7 des Transportwerkzeugs 1 eintaucht. Die Halteachse 12 des Artikelhalters 11 und die Längsachse 16 der Pipette 4 sind koaxial zueinander angeordnet. Die durch diese Klebeverbindung geschaffene Transportwerkzeug/Mikroplattendeckel-Kombination 1,2" kann mit der Pipette 4 des Pipettiersystems 3 transportiert und an beliebigen Orten im Bereich des Arbeitsfeldes bzw. im Arbeitsbereich der Pipette 4 dieses Pipettiersystems 3 abgelegt und nach Bedarf wieder aufgenommen werden. Somit ist es möglich, mithilfe einer Pipette 4 Mikroplattendeckel 2" beliebig oft von Mikroplatten 2'" abzuheben und wieder auf diesen platzieren.

Mittels einer gestrichelten Doppellinie ist die bevorzugte Position eines Werkzeugträgers 37 angegeben. In dem Fall eines stempelförmigen Transportwerkzeugs wird ein Werkzeugträger 37 bevorzugt, dessen Gestalt an die Form eines Stempelträgers erinnert (nicht gezeigt aber jedermann an sich bekannt).

Die Fig. 7B zeigt eine zweite Variante mit einem kreisförmigen oder quadratischen Klebemittel 35', das an einer sich im Wesentlichen rechtwinklig zur Muffenachse 9 ausgerichteten, flachen Halteplatte 35 angebracht ist. Diese Halteplatte 35 ist zugleich das Verbindungsstück 25 des Transportwerkzeugs 1. Das Transportwerkzeug 1 ist bereits von einer Pipette 4 eines Pipettiersystems 3 aufgenommen worden (vgl. Fig. 7A), es befindet sich momentan noch im Werkzeugträger 37, auf dem es mit seinen Verstärkungsstreben 20 aufliegt. Das Klebemittel 35' in der Form eines Trockenklebers, der vorgängig mit einer ersten Klebeseite auf die Halteplatte 35 aufgeklebt wurde, ist auf der zweiten Klebeseite noch mit einer Schutzfolie 43 abgedeckt, welche ihrerseits am Werkzeugträger 37 befestigt ist. Wenn nun die Pipette 4 aus dem Werkzeugträger 37 hochgezogen wird, so löst sich die Schutzfolie 43 von der zweiten Klebeseite des Klebemittels 35' und bleibt im Werkzeugträger 37 zurück. Das Ablösen der Schutzfolie 43 vom Klebemittel 35' wird durch eine elastische Schutzfolie 43 oder eine Querfalte in derselben erleichtert, weil damit die für das Ablösen notwendige Längenzugabe des Schutzfolienstreifens gewährleistet ist. Anschliessend kann die Pipette 4 mit dem Transportwerkzeug 1 zu einem beliebigen Laborartikel 2 (hier nicht gezeigt) bewegt und im Bereich einer ebenen Oberfläche 42 desselben abgesenkt werden. Durch leichtes Aufpressen des Klebemittels 35' auf diese ebene Oberfläche 42 wird die tragende Klebeverbindung zwischen dem Transportwerkzeug 1 und dem Laborartikel 2 hergestellt. Die Halteachse 12 des Artikelhalters 11 und die Längsachse 16 der Pipette 4 sind koaxial zueinander angeordnet. Die durch diese Klebeverbindung geschaffene Transportwerkzeug/Laborartikel-Kombination 1,2 kann mit der Pipette 4 des Pipettiersystems 3 transportiert und an beliebigen Orten im Bereich des Arbeitsfeldes bzw. im Arbeitsbereich der Pipette 4 dieses Pipettiersystems 3 abgelegt und nach Bedarf wieder aufgenommen werden. Klebeverbindungen zwischen Transportwerkzeug 1 und Laborartikel 2 können vom Pipettiersystem 3 typischerweise nicht gelöst werden, so dass üblicherweise der Laborartikel 2 mit angeklebtem Transportwerkzeug 1 entsorgt wird.

Die Figur 8 zeigt Vertikalschnitte durch zwei erfindungsgemässe Transportwerkzeuge 1 mit jeweils einem zum Eingehen einer Magnetverbindung ausgebildeten Artikelhalter 11.

Die Fig. 8A zeigt eine erste Variante mit einem integrierten Magnetmittel 36' in der Form eines zylindrischen Permanentmagneten, der mit seiner Rückseite am Verbindungsstück 25 des Transportwerkzeugs 1 befestigt (z.B. angeklebt) ist. Vorzugsweise ist der Permanentmagnet (wie gezeigt) zu seinem Schutz von Material des Transportwerkzeugs 1 umgeben, so kann der Permanentmagnet auch im Injektionsverfahren mit Polypropylen hinterspritzt hergestellt und so mit dem Material des Transportwerkzeugs 1 verbunden sein. Speziell bevorzugt ist ein Umspritzen des Permanentmagneten mit dem Polypropylen des Transportwerkzeugs 1, wobei auf der nach unten gerichteten Vorderseite des Permanentmagneten eine dünne Schicht von ca. 0.5 mm bis 1 mm Polypropylen bevorzugt wird, so dass seine Anziehungskraft nicht übermässig reduziert wird (nicht gezeigt). Der Permanentmagnet weist vorzugsweise eine grosse Feldstärke auf und umfasst typischerweise Seltene Erden wie Samarium, Kobalt und/oder Neodym. Das Transportwerkzeug 1 ist bereits von einer Pipette 4 eines Pipettiersystems 3 aufgenommen worden (vgl. Fig. 7B), es befindet sich momentan noch im Werkzeugträger 37, auf dem es mit seinen Verstärkungsstreben 20 aufliegt. Alternativ kann das Transportwerkzeug 1 mit dem Permanentmagneten nach unten auf dem Werkzeugträger 37 aufstehen, wobei der letztere dann nur noch eine Stabilisierungsfunktion hat und ein Umfallen oder Wegrutschen des Transportwerkzeugs 1 verhindert. Die Halteachse 12 des Artikelhalters 11 und die Längsachse 16 der Pipette 4 sind koaxial zueinander angeordnet. Die Pipette 4 mit dem Transportwerkzeug 1 kann aus dem Werkzeugträger 37 gehoben, zu einem beliebigen Laborartikel 2 (hier nicht gezeigt) bewegt und im Bereich einer ebenen Oberfläche 42 desselben abgesenkt werden. Bevorzugt ist jene ebene Oberfläche 42 des aufzunehmenden Laborartikels 2 mit einer Folie aus magnetisierbarem Material 44 (wie z.B. Eisen, Nickel oder Eisen/Nickel-Legierungen) beklebt oder bedeckt. Durch Absenken des Transportwerkzeugs 1 auf diese ebene Oberfläche 42 wird die tragende Magnetverbindung zwischen dem Permanentmagneten des Transportwerkzeug 1 und magnetisierbaren Material 44 des Laborartikels 2 hergestellt. Die durch diese Magnetverbindung geschaffene Transportwerkzeug/Laborartikel-Kombination 1,2 kann mit der Pipette 4 des Pipettiersystems 3 transportiert und an beliebigen Orten im Bereich des Arbeitsfeldes bzw. im Arbeitsbereich der Pipette 4 dieses Pipettiersystems 3 abgelegt und nach Bedarf wieder aufgenommen werden.

Die Fig. 8B zeigt eine zweite Variante mit einem Magnetmittel 36' in der Form eines kreisförmigen oder quadratischen Bandmagneten, der an einer sich im Wesentlichen rechtwinklig zur Muffenachse 9 ausgerichteten, flachen Halteplatte 35 angebracht (z.B. aufgeklebt) ist. Diese Halteplatte 35 ist zugleich das Verbindungsstück 25 des Transportwerkzeugs 1. Vorzugsweise weist diese Halteplatte 35 eine wesentlich grössere Fläche als das Verbindungsstück 25 auf, weil Bandmagneten erfahrungsgemäss eine geringere Feldstärke als beispielsweise zylindrische Permanentmagneten besitzen. Das Transportwerkzeug 1 ist von einer Pipette 4 eines Pipettiersystems 3 aufgenommen worden und es wurde bereits eine tragende Magnetverbindung zwischen dem Transportwerkzeug 1 und dem magnetisierbarem Material 44 (wie z.B. eine Folie mit Eisen, Nickel oder Eisen/Nickel-Legierungen) auf der Oberfläche 42 eines Mikroplattendeckels 2" hergestellt. Alternativ ist jene ebene Oberfläche 42 des aufzunehmenden Laborartikels 2 mit einem zweiten Bandmagneten beklebt (nicht gezeigt). Die durch diese Magnetverbindung geschaffene Transportwerkzeug/Laborartikel-Kombination 1,2 kann mit der Pipette 4 des Pipettiersystems 3 transportiert und an beliebigen Orten im Bereich des Arbeitsfeldes bzw. im Arbeitsbereich der Pipette 4 dieses Pipettiersystems 3 abgelegt und nach Bedarf wieder aufgenommen werden. Mittels einer gestrichelten Doppellinie ist die bevorzugte Position eines Werkzeugträgers 37 angegeben. In dem Fall eines stempelförmigen Transportwerkzeugs wird ein Werkzeugträger 37 bevorzugt, dessen Gestalt an die Form eines Stempelträgers erinnert (nicht gezeigt aber jedermann an sich bekannt).

Magnetverbindungen zwischen Transportwerkzeug 1 und Laborartikel 2 können manuell oder auch automatisiert vom Pipettiersystem 3 typischerweise wieder gelöst werden, indem der Laborartikel 2 gegen Seitwärtsbewegungen gesichert abgelegt und dann das Transportwerkzeug 1 seitwärts und beispielsweise in im Wesentlichen horizontaler Richtung vom magnetisierbaren Material 44 des Laborartikels 2 abgezogen wird. Dieses einfache Wiederverwenden des Transportwerkzeugs 1 ist ein grosser Vorteil der Magnetverbindung und ermöglicht, dass nur der Laborartikel 2 (falls notwendig) entsorgt werden muss.

Pipettenspitzen 6 können als Einwegartikel nach dem Gebrauch auf eine Abfallrutsche zur Entsorgung abgeworfen werden. Die Pipettenspitzen 6 können zum wiederholten Gebrauch aber auch wieder in leere Lageröffnungen 5' eines Pipettenspitzenträgers 2' eingeführt werden bis sich die Verstärkungsstreben 26 ein paar Millimeter über der Oberkante des Pipettenspitzenträgers 2' befindet. Dann werden die Pipettenspitzen 6 gemäss Fig. 6B "abgeworfen" resp. zurückgesetzt. Das Zurücksetzen und Wiederverwenden macht Sinn, wenn die entsprechenden Pipettenspitzen 6 z.B. zum Verteilen von Pufferlösungen, nicht aber von Proben, verwendet wurden. Derselbe Grundmechanismus kann zum gezielten Absetzen und Wiederverwenden von anderen Laborartikeln 2, wie z.B. Deckeln von Mikroplatten 2"', Trögen und dergleichen angewendet werden.

Gleiche Bezugszeichen bezeichnen entsprechende Elemente der vorliegenden Erfindung, wenngleich nicht in jedem Fall ausführlich darauf Bezug genommen wird. Wenngleich sich viele der gezeigten Beispiele auf Pipettenspitzenträger 2' beziehen, so können alle gewonnen Erkenntnisse und definierten Merkmale im Zusammenhang mit den erfindungsgemässen Transportwerkzeugen 1 und derer Verwendung sinngemäss auf das Aufnehmen, Transportieren, Deponieren oder Abwerfen praktisch beliebiger Laborartikel 2 angewendet werden.

**Bezugszeichenliste**

| | | | |
|---|---|---|---|
| 1 | Transportwerkzeug | 30 | Abwerfmechanismus |
| 2 | Laborartikel | 31 | Seitenwand von 7 |
| 2' | Pipettenspitzenträger | 32 | Aussenseite von 11 und 13 |
| 2" | Mikroplattendeckel | 33 | Vorsprung |
| 2"' | Mikroplatte | 34 | Aussenseite von 7 |
| 3 | Pipettiersystem | 35 | Halteplatte |
| 4 | Pipette | 35' | Klebemittel |
| 5 | Öffnung | 36 | Haltehülse |
| 5' | Lageröffnung | 36' | Magnetmittel |
| 5" | Well von 2'" | 37 | Werkzeugträger, Werkzeughalter |
| 6 | Pipettenspitze | 38 | Abwerfhebel |
| 7 | Steckmuffe | 39 | oberer Rand von 19 |
| 8 | Innenraum von 7 | 40 | Schlitz von 7 |
| 9 | Muffenachse | 41 | Aussenhülse der Pipette 4 |
| 10 | Aufnahmeöffnung von 7 | 42 | ebene Oberfläche von 2,2',2" |
| 11 | Artikelhalter | 43 | Schutzfolie |
| 12 | Halteachse von 11 | 44 | magnetisierbares Material |
| 13 | Haltemittel | a | grösster Aussendurchmesser von 13 |
| 14,14' | ringförmige Erhebung | b | kleinster Aussendurchmesser von 25 |
| 15 | Längsachse von 6 | c | erster Innendurchmesser von 8 |
| 16 | Längsachse von 4 | d | zweiter Innendurchmesser von 8 |
| 17 | Aufnahmeöffnung von 6 | e | kleinster Innendurchmesser von 5,5' |
| 18 | Halsstück von 1 | f,f' | äusserer Innendurchmesser von 5,5' |
| 19 | Aufnahmeende, -konus von 4 | g | Einstecktiefe von 1 |
| 20,20' | Verstärkungsstreben von 1 | h,h' | Eintauchtiefe von 4 |
| 21 | Vertiefung für 14 | i | Aussendurchmesser von 14 |
| 22 | Schlitz | k | Aussendurchmesser von 14' |
| 23 | Oberseite von 2,2',2" | l | Länge (I₆,I₇,I₁₁,I₁₃,I_{14-14'},I₂₅,I₃₅,Iₑ) |
| 24 | Unterseite von 2,2',2" | m | erster Innendurchmesser von 6 |
| 25 | Verbindungsstück | n | zweiter Innendurchmesser von 6 |
| 26 | Verstärkungsstrebe von 6 | o | erster Aussendurchmesser von 6 |
| 27 | Innenraum von 6 | p | zweiter Aussendurchmesser von 6 |
| 28 | Lüftungsloch | q | Aussendurchmesser von 19 |
| 29 | Kragen von 7 | r | Innendurchmesser Lageröffnung v. 37 |

## Patentansprüche

1. Transportwerkzeug (1) zum Transportieren eines Pipettenspitzenträgers (2') oder einer Mikroplatte (2"') mit einer Pipette (4) eines Pipettiersystems (3), wobei das Transportwerkzeug (1) zumindest umfasst:
a) eine zum Eingehen einer lösbaren Steckverbindung mit einem Aufnahmekonus (19) einer Pipette (4) des Pipettiersystems (3) ausbildete Steckmuffe (7), die einen Innenraum (8), eine Muffenachse (9) sowie eine Aufnahmeöffnung (10) umfasst, wobei der zum Aufstecken einer Einwegpipettenspitze (6) ausgebildete Aufnahmekonus (19) einer Pipette (4) des Pipettiersystems (3) durch die Aufnahmeöffnung (10) in den Innenraum (8) der Steckmuffe (7) einsteckbar ist, und wobei der Innenraum (8) der Steckmuffe (7) so ausgestaltet ist, dass das Transportwerkzeug (1) anstelle einer Einwegpipettenspitze (6) auf den Aufnahmekonus (19) der Pipette (4) aufsteckbar und auch wieder vom Aufnahmekonus (19) dieser Pipette (4) abwerfbar ist;
b) einen Artikelhalter (11), welcher eine Halteachse (12) und zumindest ein Haltemittel (13) umfasst, das zum Bilden einer Tragverbindung mit einem Pipettenspitzenträger (2') oder einer Mikroplatte (2"') ausgebildet ist, und
c) ein Verbindungsstück (25), welches den zumindest einen Artikelhalter (11) mit der Steckmuffe (7) an ihrem der Aufnahmeöffnung (10) gegenüberliegenden Ende so verbindet, dass die Halteachse(n) (12) des zumindest einen Artikelhalters (11) und die Muffenachse (9) der Steckmuffe (7) koaxial oder achsenparallel zueinander angeordnet sind, wobei der Artikelhalter (11) ein Haltemittel (13) umfasst, welches zumindest annähernd kugelförmig, ellipsoidförmig oder eiförmig ausgebildet ist oder alternativ der Artikelhalter (11) als ein länglicher Hohlkörper ausgebildet ist und eine Mehrzahl von als Vorsprünge ausgebildete Haltemittel (13) umfasst, welche auf einer Aussenseite (32) des Artikelhalters (11) angeordnet sind, und wobei der Artikelhalter (11) zum Eingehen einer reibschlüssigen Steckverbindung mit einer Lageröffnung (5') im Pipettenspitzenträger (2') oder mit einem Well (5") der Mikroplatte (2"') ausgebildet ist.

2. Transportwerkzeug (1) zum Transportieren eines Pipettenspitzenträgers (2') mit einer Pipette (4) eines Pipettiersystems (3), wobei das Transportwerkzeug (1) zumindest umfasst:
a) eine zum Eingehen einer lösbaren Steckverbindung mit einem Aufnahmekonus (19) einer Pipette (4) des Pipettiersystems (3) ausbildete Steckmuffe (7), die einen Innenraum (8), eine Muffenachse (9) sowie eine Aufnahmeöffnung (10) umfasst, wobei der zum Aufstecken einer Einwegpipettenspitze (6) ausgebildete Aufnahmekonus (19) einer Pipette (4) des Pipettiersystems (3) durch die Aufnahmeöffnung (10) in den Innenraum (8) der Steckmuffe (7) einsteckbar ist, und wobei der Innenraum (8) der Steckmuffe (7) so ausgestaltet ist, dass das Transportwerkzeug (1) anstelle einer Einwegpipettenspitze (6) auf den Aufnahmekonus (19) der Pipette (4) aufsteckbar und auch wieder vom Aufnahmekonus (19) dieser Pipette (4) abwerfbar ist;
b) einen Artikelhalter (11), welcher eine Halteachse (12) und zumindest ein Haltemittel (13) umfasst, das zum Bilden einer Tragverbindung mit einer Lageröffnung (5') eines Pipettenspitzenträgers (2') ausgebildet ist, und
c) ein Verbindungsstück (25), welches den zumindest einen Artikelhalter (11) mit der Steckmuffe (7) an ihrem der Aufnahmeöffnung (10) gegenüberliegenden Ende so verbindet, dass die Halteachse(n) (12) des zumindest einen Artikelhalters (11) und die Muffenachse (9) der Steckmuffe (7) koaxial oder achsenparallel zueinander angeordnet sind,
wobei der Artikelhalter (11) zumindest zwei Haltemittel (13) umfasst, welche fingerförmig ausgebildet sind und bei eingestecktem Artikelhalter (11) in eine Lageröffnung (5') eines Pipettenspitzenträgers (2') diese Lageröffnung (5') vollständig durchdringen, wobei zumindest eines dieser Haltemittel (13) ein fingerförmiger Schnapphaken mit einem Anschlag ist, welcher bei eingestecktem Artikelhalter (11) in die Lageröffnung (5) des Pipettenspitzenträgers (2') dessen Unterseite beaufschlägt und so eine Schnappverbindung mit diesem bildet.

3. Transportwerkzeug (1) nach Anspruch 1 oder 2, wobei der Innenraum (8) der Steckmuffe (7) konisch zulaufend ausgebildet ist, wobei die Aufnahmeöffnung (10) für die Pipette (4) an einem breiteren Ende und das Verbindungsstück (25) an einem engeren Ende des Innenraums (8) angeordnet ist, so dass die Steckmuffe (7) auf das Aufnahmeende (19) der Pipette (4) und zumindest eine ringförmige Erhebung (14,14') auf diesem Aufnahmeende (19) der Pipette (4) reibschlüssig aufsteckbar ist.

4. Transportwerkzeug (1) nach Anspruch 1 oder 2, wobei der Innenraum (8) der Steckmuffe (7) zylindrisch oder konisch zulaufend ausgebildet ist und zumindest eine umlaufende Vertiefung (21) umfasst, welche zu je einer ringförmigen Erhebung (14,14') auf dem Aufnahmeende (19) der Pipette (4) komplementär ausgebildet ist, so dass die Steckmuffe (7) auf das Aufnahmeende (19) der Pipette und ihre ringförmigen Erhebungen (14,14') formschlüssig aufsteckbar ist.

5. Transportwerkzeug (1) nach einem der Ansprüche 1, 3 oder 4, wobei der zumindest eine Artikelhalter (11) einen grössten Aussendurchmesser (a) aufweist, der grösser ist als der kleinste Innendurchmesser (e) einer Lageröffnung (5') eines Pipettenspitzenträgers (2') oder eines Wells (5") einer Mikroplatte (2'''), **und** wobei der Artikelhalter (11) zumindest einen Schlitz (22) umfasst, welcher sich, ausgehend von dem dem Verbindungsstück (25) gegenüberliegenden Ende des Artikelhalters (11), in Richtung des Verbindungsstücks (25) erstreckt und über die grösste Querausdehnung des Artikelhalters (11) in Bezug auf dessen Halteachse (12) hinausgeht, wodurch der Artikelhalter (11) des Transportwerkzeugs (1) unter elastischer Verformung der Haltemittel (13) in eine Lageröffnung (5') eines Pipettenspitzenträgers (2') oder in ein Well (5") einer Mikroplatte (2'") reibschlüssig einsteckbar ausgebildet ist.

6. Transportwerkzeug (1) nach Anspruch 1, wobei es eine zusätzliche, die Reibung erhöhende Oberfläche im Innenraum (8) der Steckmuffe (7) und/oder auf einer Aussenseite (32) des zumindest einen Haltemittels (13) umfasst.

7. Transportwerkzeug (1) nach Anspruch 1 oder 2, wobei es zumindest ein Lüftungsloch (28) zum Ermöglichen eines Druckausgleichs im Innenraum (8) der Steckmuffe (7) umfasst.

8. Transportwerkzeug (1) nach einem der Ansprüche 1 bis 7, wobei es einen einzigen Artikelhalter (11) umfasst, der durch das Verbindungsstück (25) so mit der Steckmuffe (7) verbunden ist, dass dessen Halteachse (12) koaxial zu der Muffenachse (9) angeordnet ist.

9. Transportwerkzeug (1) nach einem der Ansprüche 1 bis 8, wobei es zwei Artikelhalter (11) umfasst, welche durch das Verbindungsstück (25) so mit der Steckmuffe (7) verbunden sind, dass die Halteachse (12) eines ersten Artikelhalters (11) koaxial oder achsenparallel zu der Muffenachse (9) und die Halteachse (12) eines zweiten Artikelhalters (11) achsenparallel zu der Muffenachse (9) angeordnet ist.

10. Transportwerkzeug (1) nach Anspruch 9, wobei der Achsabstand zwischen den Halteachsen (12) dem Achsabstand zweier Lageröffnungen (5) eines aufzunehmenden Pipettenspitzenträgers (2') oder dem Achsabstand zweier Wells (5") einer Mikroplatte (2"') entspricht.

11. Transportwerkzeug (1) nach Anspruch 1 oder 2, wobei es einstückig und aus Kunststoff hergestellt ist.

12. Verwendung eines Transportwerkzeugs (1) nach einem der vorhergehenden Ansprüche zum Aufnehmen und/oder Transportieren und/oder Platzieren und/oder Abwerfen eines Pipettenspitzenträgers (2') oder einer Mikroplatte (2"') mit einer Pipette (4) eines Pipettiersystems (3).

13. Verfahren zum Aufnehmen und/oder Transportieren und/oder Platzieren und/oder Abwerfen eines Pipettenspitzenträgers (2') oder einer Mikroplatte mit einer Pipette (4) eines Pipettiersystems (3), wobei ein an dieser Pipette (4) befestigbares Transportwerkzeug (1) nach Anspruch 1 oder 2 verwendet wird; wobei der zum Aufstecken einer Einwegpipettenspitze (6) ausgebildete Aufnahmekonus (19) einer Pipette (4) des Pipettiersystems (3) durch die Aufnahmeöffnung (10) in den Innenraum (8) der Steckmuffe (7) des Transportwerkzeugs (1) eingesteckt wird, **und** wobei der Pipettenspit-zenträger (2') oder die Mikroplatte (2"') durch Eingehen einer reibschlüssigen Steckverbindung des zumindest einen Artikelhalters (11) des Transportwerkzeugs (1) mit zumindest einer Lageröffnung (5') im Pipettenspitzenträger (2') oder mit zumindest einem Well (5") der Mikroplatte (2"') **oder** wobei der Pipettenspitzenträger durch Eingehen einer Schnappverbindung des zumindest einen Artikelhalters (11) des Transportwerkzeugs (1) mit zumindest einer Lageröffnung (5') im Pipettenspitzenträger (2') an dem Transportwerkzeug (1) befestigt wird.

## Claims

1. Transport tool (1) for transporting a pipette tip carrier (2') or a microplate (2"') using a pipette (4) of a pipetting system (3), wherein the transport tool (1) at least comprises:
a) a plug-in sleeve (7), which is implemented to form a releasable plug connection with a receptacle cone (19) of a pipette (4) of the pipetting system (3), and which comprises an interior (8), a sleeve axis (9), and a receptacle opening (10), wherein the receptacle cone (19), which is implemented for plugging on a disposable pipette tip (6) of a pipette (4) of the pipetting system (3), can be plugged through the receptacle opening (10) into the interior (8) of the plug-in sleeve (7), and wherein the interior (8) of the plug-in sleeve (7) is embodied so that the transport tool (1) can be plugged onto the receptacle cone (19) of the pipette (4) instead of a disposable pipette tip (6) and can also be discarded again from the receptacle cone (19) of this pipette (4);
b) an article holder (11), which comprises a holding axis (12) and at least one holding means (13), which is implemented to form a support connection with a pipette tip carrier (2') or a microplate (2"'), and
c) a connecting part (25), which connects the at least one article holder (11) to the plug-in sleeve (7) at its end opposite to the receptacle opening (10), so that the holding axis (axes) (12) of the at least one article holder (11) and the sleeve axis (9) of the plug-in sleeve (7) are arranged coaxially or axially-parallel to one another,
wherein the article holder (11) comprises a holding means (13), which is implemented as at least approximately spherical, ellipsoidal, or ovoid, or alternatively, the article holder (11) is implemented as an oblong hollow body and comprises a plurality of holding means (13) implemented as projections, which are arranged on an outer side (32) of the article holder (11),
and wherein the article holder (11) is implemented to form a friction-locked plug connection with a storage opening (5') in the pipette tip carrier (2') or with a well (5") of the microplate (2'").

2. Transport tool (1) for transporting a pipette tip carrier (2') using a pipette (4) of a pipetting system (3), wherein the transport tool (1) at least comprises:
a) a plug-in sleeve (7), which is implemented to form a releasable plug connection with a receptacle cone (19) of a pipette (4) of the pipetting system (3), and which comprises an interior (8), a sleeve axis (9), and a receptacle opening (10), wherein the receptacle cone (19), which is implemented for plugging on a disposable pipette tip (6) of a pipette (4) of the pipetting system (3), can be plugged through the receptacle opening (10) into the interior (8) of the plug-in sleeve (7), and wherein the interior (8) of the plug-in sleeve (7) is embodied so that the transport tool (1) can be plugged onto the receptacle cone (19) of the pipette (4) instead of a disposable pipette tip (6) and can also be discarded again from the receptacle cone (19) of this pipette (4);
b) an article holder (11), which comprises a holding axis (12) and at least one holding means (13), which is implemented to form a support connection with a storage opening (5') of a pipette tip carrier (2'), and
c) a connecting part (25), which connects the at least one article holder (11) to the plug-in sleeve (7) at its end opposite to the receptacle opening (10), so that the holding axis (axes) (12) of the at least one article holder (11) and the sleeve axis (9) of the plug-in sleeve (7) are arranged coaxially or axially-parallel to one another,
wherein the article holder (11) comprises at least two holding means (13), which are implemented as finger-shaped and, when the article holder (11) is plugged into a storage opening (5') of a pipette tip carrier (2'), completely penetrates this storage opening (5'), wherein at least one of these holding means (13) is a finger-shaped snap hook having a stop which, when the article holder (11) is plugged into the storage opening (5) of the pipette tip carrier (2'), is applied to its bottom side and thus forms a snap connection thereto.

3. Transport tool (1) according to claim 1 or 2, wherein the interior (8) of the plug-in sleeve (7) is implemented as conically tapering, wherein the receptacle opening (10) for the pipette (4) is arranged on a wider end and the connecting part (25) is arranged on a narrower end of the interior (8), so that the plug-in sleeve (7) can be plugged onto the receptacle end (19) of the pipette (4) and at least one ring-shaped protrusion (14, 14') on this receptacle end (19) of the pipette (4) in a friction-locked manner.

4. Transport tool (1) according to claim 1 or 2, wherein the interior (8) of the plug-in sleeve (7) is implemented as cylindrical or conically tapering and comprises at least one circumferential depression (21), which is implemented as complementary in each case to a ring-shaped protrusion (14, 14') on the receptacle end (19) of the pipette (4), so that the plug-in sleeve (7) can be plugged in a form-fitted manner onto the receptacle end (19) of the pipette and its ring-shaped protrusions (14, 14').

5. Transport tool (1) according to one of the claims 1, 3 or 4, wherein the at least one article holder (11) has a largest external diameter (a), which is larger than the smallest internal diameter (e) of a storage opening (5') of a pipette tip carrier (2') or a well (5") of a microplate (2"'), and wherein the article holder (11) comprises at least one slot (22), which extends, originating from the end of the article holder (11) opposite to the connecting part (25), in the direction of the connecting part (25) and goes beyond the largest transverse extension of the article holder (11) with respect to its holding axis (12), whereby the article holder (11) of the transport tool (1) is implemented so it can be plugged, with elastic deformation of the holding means (13), in a friction-locked manner into a storage opening (5') of a pipette tip carrier (2') or into a well (5") of a microplate (2"').

6. Transport tool (1) according to claim 1, wherein it comprises an additional surface, which increases the friction, in the interior (8) of the plug-in sleeve (7) and/or on an outer side (32) of the at least one holding means (13).

7. Transport tool (1) according to claim 1 or 2, wherein it comprises at least one ventilation hole (28) for enabling a pressure equalization in the interior (8) of the plug-in sleeve (7).

8. Transport tool (1) according to one of the claims 1 to 7, wherein it comprises a single article holder (11), which is connected by the connecting part (25) to the plug-in sleeve (7) so that its holding axis (12) is arranged coaxially to the sleeve axis (9).

9. Transport tool (1) according to one of the claims 1 to 8, wherein it comprises two article holders (11), which are connected by the connecting part (25) to the plug-in sleeve (7) so that the holding axis (12) of a first article holder (11) is arranged coaxially or axially-parallel to the sleeve axis (9) and the holding axis (12) of a second article holder (11) is arranged axially-parallel to the sleeve axis (9).

10. Transport tool (1) according to claim 9, wherein the axial spacing between the holding axis (12) corresponds to the axial spacing of two storage openings (5) of a pipette tip carrier (2') to be received or the axial spacing of two wells (5") of a microplate (2'").

11. Transport tool (1) according to claim 1 or 2, wherein it is produced in one piece and from plastic.

12. Use of a transport tool (1) according to any one of the preceding claims for receiving and/or transporting and/or placing and/or discarding a pipette tip carrier (2') or a microplate (2"') using a pipette (4) of a pipetting system (3).

13. Method for receiving and/or transporting and/or placing and/or discarding a pipette tip carrier (2') or a microplate (2'") using a pipette (4) of a pipetting system (3), wherein a transport tool (1) according to claim 1 or 2, fastenable on this pipette (4), is used,
wherein the receptacle cone (19) of a pipette (4) of the pipetting system (3), which is implemented for plugging on a disposable pipette tip (6), is plugged through the receptacle opening (10) into the interior (8) of the plug-in sleeve (7) of the transport tool (1), and wherein
the pipette tip carrier (2') or the microplate (2'") is fastened to the transport tool (1) by forming a friction-locked connection between the at least one article holder (11) of the transport tool (1) with at least one storage opening (5') in the pipette tip carrier (2') or with at least one well (5") of the microplate, or wherein
the pipette tip carrier is fastened to the transport tool (1) by forming a snap connection of the at least one article holder (11) of the transport tool (1) with at least one storage opening (5') in the pipette tip carrier (2').

## Revendications

1. Outil de transport (1) pour transporter un support d'embout de pipette (2') ou une microplaque (2"') avec une pipette (4) d'un système de pipetage (3),
l'outil de transport (1) comprenant au moins :
a) un manchon enfichable (7) conçu pour réaliser une liaison par enfichage amovible avec un cône de réception (19) d'une pipette (4) du système de pipetage (3), lequel manchon comprend un espace intérieur (8), un axe de manchon (9) et une ouverture de réception (10), le cône de réception (19) d'une pipette (4) du système de pipetage (3) conçu pour insérer un embout de pipette jetable (6) pouvant être enfiché par l'ouverture de réception (10) dans l'espace intérieur (8) du manchon enfichable (7), et l'espace intérieur (8) du manchon enfichable (7) étant réalisé de telle sorte que l'outil de transport (1) peut être enfiché sur le cône de réception (19) de la pipette (4) à la place de l'embout de pipette jetable (6) et peut également être éjecté du cône de réception (19) de cette pipette (4) ;
b) un support d'article (11) qui comprend un axe de retenue (12) et au moins un moyen de retenue (13), qui est conçu pour former une liaison de support avec un support d'embout de pipette (2') ou une microplaque (2'"),
c) un élément de raccord (25) qui raccorde le au moins un support d'article (11) au manchon enfichable (7) au niveau de son extrémité opposée à l'ouverture de réception (10), de sorte que l'axe ou les axes de retenue (12) du au moins un support d'article (11) et l'axe de manchon (9) du manchon enfichable (7) sont agencés de façon coaxiale ou paraxiale entre eux,
dans lequel le support d'article (11) comprend un moyen de retenue (13), qui est réalisé au moins approximativement sous la forme d'une sphère, d'une ellipse ou d'un oeuf, ou dans lequel, en alternative, le support d'article (11) est réalisé sous la forme d'un corps creux oblong et comprend une pluralité de moyens de retenue (13) réalisés sous la forme de saillies, lesquels moyens de retenue sont agencés sur un côté extérieur (32) du support d'article (11), et dans lequel le support d'article (11) est conçu pour réaliser un raccordement enfichable par friction avec une ouverture de support (5') dans le support d'embout de pipette (2') ou avec un puits (5") de la microplaque (2"').

2. Outil de transport (1) pour transporter un support d'embout de pipette (2') avec une pipette (4) d'un système de pipetage (3), l'outil de transport (1) comprenant au moins :
a) un manchon enfichable (7) conçu pour réaliser une liaison enfichable amovible avec un cône de réception (19) d'une pipette (4) du système de pipetage (3), lequel manchon comprend un espace intérieur (8), un axe de manchon (9) et une ouverture de réception (10), dans lequel le cône de réception (19) d'une pipette (4) du système de pipetage (3) conçu pour enficher un embout de pipette jetable (6) peut être enfiché dans l'espace intérieur (8) du manchon enfichable (7) par l'ouverture de réception (10), et dans lequel l'espace intérieur (8) du manchon enfichable (7) est réalisé de telle sorte que l'outil de transport (1) peut être enfiché sur le cône de réception (19) de la pipette (4) à la place d'un embout de pipette jetable (6) et être éjecté du cône de réception (19) de cette pipette (4) ;
b) un support d'article (11) qui comprend un axe de retenue (12) et au moins un moyen de retenue (13) et qui est conçu pour former une liaison de support avec une ouverture (5') d'un support d'embout de pipette (2'), et
c) un élément de raccord (25) qui raccorde le au moins un support d'article (11) au manchon enfichable (7) au niveau de son extrémité opposée à l'ouverture de réception (10), de sorte que le ou les axes de retenue (12) du au moins un support d'article (11) et l'axe de manchon (9) du manchon enfichable (7) sont agencés de façon coaxiale ou paraxiale entre eux,
dans lequel le support d'article (11) comprend au moins deux moyens de retenue (13), qui sont réalisés en forme de doigts et qui, lorsque le support d'article (11) est enfiché dans une ouverture de support (5') d'un support d'embout de pipette (2'), traversent complètement cette ouverture de support (5'), au moins un de ces moyens de retenue (13) étant un crochet d'encliquetage en forme de doigt avec une butée, lequel crochet, lorsque le support d'article (11) est enfiché dans l'ouverture de support (5') du support d'embout de pipette (2') vient s'appliquer au niveau de sa face inférieure et forme ainsi une liaison par encliquetage avec ce dernier.

3. Outil de transport (1) selon la revendication 1 ou 2, dans lequel l'espace intérieur (8) du manchon enfichable (7) est réalisé conique, dans lequel l'ouverture de réception (10) pour la pipette (4) est agencée au niveau de l'extrémité la plus large et l'élément de raccord (25) au niveau de l'extrémité la plus étroite de l'espace intérieur (8), de sorte que le manchon enfichable (7) peut être enfiché par friction sur l'extrémité de réception (19) de la pipette (4) et au moins une élévation annulaire (14, 14') sur cette extrémité de réception (19) de la pipette (4).

4. Outil de transport (1) selon la revendication 1 ou 2, dans lequel l'espace intérieur (8) du manchon enfichable (7) est réalisé cylindrique ou conique, et comprend au moins un renfoncement périphérique (21) qui est réalisé de façon complémentaire à une élévation annulaire (14, 14') sur l'extrémité de réception (19) de la pipette (4), de sorte que le manchon enfichable (7) peut être enfiché par correspondance de forme sur l'extrémité de réception (9) de la pipette et ses élévations annulaires (14, 14').

5. Outil de transport (1) selon l'une des revendications 1, 3 ou 4, dans lequel le au moins un support d'article (11) présente un diamètre extérieur le plus grand (a) supérieur au diamètre intérieur le plus petit (e) d'une ouverture de support (5') d'un support d'embout de pipette (2') ou d'un puits (5") d'une microplaque (2"'), et dans lequel le support d'article (11) comprend au moins une fente (22) qui s'étend, en partant de l'extrémité du support d'article (11) opposée à l'élément de raccord (25), dans la direction de l'élément de raccord (25) et dépasse de la plus grande extension transversale du support d'article (11) par rapport à l'axe de retenue (12) de ce dernier, le support d'article (11) de l'outil de transport (1) étant réalisé enfichable par friction dans une ouverture de support (5') d'un support d'embout de pipette (2') ou dans un puits (5") d'une microplaque (2"') par déformation élastique du moyen de retenue (13).

6. Outil de transport (1) selon la revendication 1, comprenant une surface supplémentaire augmentant la friction dans l'espace intérieur (8) du manchon enfichable (7) et/ou sur un côté extérieur (32) du au moins un moyen de retenue (13).

7. Outil de transport (1) selon la revendication 1 ou 2, comprenant au moins un trou de ventilation (28) pour permettre une compensation de pression dans l'espace intérieur (8) du manchon enfichable (7).

8. Outil de transport (1) selon l'une des revendications 1 à 7, comprenant un seul support d'article (11) qui est raccordé au manchon enfichable (7) par l'élément de raccord (25), de sorte que l'axe de retenue (12) de ce dernier est agencé de façon coaxiale par rapport à l'axe de manchon (9).

9. Outil de transport (1) selon l'une des revendications 1 à 8, comprenant deux supports d'article (11) qui sont raccordés au manchon enfichable (7) par l'élément de raccord (25), de sorte que l'axe de retenue (12) d'un premier support d'article (11) est agencé de façon coaxiale ou paraxiale par rapport à l'axe de manchon (9) et que l'axe de retenue (12) d'un deuxième support d'article (11) est agencé de façon paraxiale par rapport à l'axe de manchon (9).

10. Outil de transport (1) selon la revendication 9, dans lequel l'entraxe entre les axes de retenue (12) correspond à l'entraxe des deux ouvertures de support (5) d'un support d'embout de pipette (2') à recevoir ou à l'entraxe de deux puits (5") d'une microplaque (2"').

11. Outil de transport (1) selon la revendication 1 ou 2, fabriqué d'un seul tenant en matière plastique.

12. Utilisation d'un outil de transport (1) selon l'une des revendications précédentes pour recevoir et/ou transporter et/ou positionner et/ou jeter un support d'embout de pipette (2') ou une microplaque (2"') avec une pipette (4) d'un système de pipetage (3).

13. Procédé pour recevoir et/ou transporter et/ou positionner et/ou jeter un support d'embout de pipette (2') ou une microplaque avec une pipette (4) d'un système de pipetage (3), dans lequel on utilise un outil de transport (1) selon la revendication 1 ou 2 pouvant être fixé à cette pipette (4), dans lequel le cône de réception (19) d'une pipette (4) d'un système de pipetage (3) conçu pour recevoir un embout de pipette jetable (6) est enfiché dans l'espace intérieur (8) du manchon enfichable (7) de l'outil de transport (1) par l'ouverture de réception (10), et dans lequel le support d'embout de pipette (2') ou la microplaque (2"') est fixé par réalisation d'une liaison par friction enfichable du au moins un support d'article (11) de l'outil de transport (1) avec au moins une ouverture de support (5') dans le support d'embout de pipette (2') ou avec au moins un puits (5") de la microplaque (2"') ou dans lequel le support d'embout de pipette est fixé par la réalisation d'une liaison par encliquetage du au moins un support d'article (11) de l'outil de transport (1) avec au moins une ouverture de support (5') dans le support d'embout de pipette (2') sur l'outil de transport (1).
